(19) Europäisches Patentamt / European Patent Office / Office européen des brevets

(11) **EP 2 899 964 A2**

(12) **EUROPEAN PATENT APPLICATION**

(43) Date of publication:
29.07.2015 Bulletin 2015/31

(51) Int Cl.:
*H04N 1/54* (2006.01)    *H04N 1/60* (2006.01)

(21) Application number: 15152318.0

(22) Date of filing: 23.01.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 24.01.2014 JP 2014011059

(71) Applicant: **Seiko Epson Corporation
Shinjuku-ku
Tokyo (JP)**

(72) Inventor: **Okumura, Yoshio
Suwa-shi, Nagano 392-8502 (JP)**

(74) Representative: **Miller Sturt Kenyon
9 John Street
London WC1N 2ES (GB)**

(54) **Method for generating lookup table and color conversion device**

(57)    A method for generating a lookup table that generates a lookup table in which a usage amount of a first coloring material used in formation of a printed matter by a printer and a usage amount of a second coloring material used in formation of a color reproduction image by an image forming apparatus are associated includes generating correction data that corrects a difference between a first colorimetry result in which color of an image printed matter formed with a printer is measured with a first colorimetry apparatus and a second colorimetry result in which color of the image printed matter is measured with a second colorimetry apparatus; and correcting a source lookup table so that a correspondence relationship between the usage amounts of the first and second coloring materials stipulated in the source lookup table and a correspondence relationship based on the colorimetry results by the first colorimetry apparatus by referencing the correction data to generate a lookup table.

FIG. 3

COORDINATES IN CMYK COLOR SPACE (Dc, Dm, Dy, Dk)
LATTICE POINT INK AMOUNT (dc, dm, dy, dk, dlc, dlm)

● TOTAL N2 POINTS OF SECOND LATTICE POINTS G3, G4, G5
(TOTAL N2 POINTS OF LATTICE POINTS G2 OF INTERMEDIATE LUT 245)

EP 2 899 964 A2

**Description**

<u>BACKGROUND</u>

1. Technical Field

The present invention relates to a method for generating a lookup table (LUT) and a color conversion device.

2. Related Art

In order to verify the tone or the like of a printed matter formed with a printing device prior to using the printing device, verification is performed by forming a proof with a printing proof device. In a case of using an offset printer or a gravure printer as the printing device, for example, the printed matter is formed with four varieties of coloring material, referred to as CMYK (cyan, magenta, yellow, black). Although use of the same CMYK coloring materials as the printing device for direct digital color proof (DCCP) in the printing proof device also takes place, the DDCP device is expensive. Thus, an ink jet printer or the like that uses a different ink to the coloring material of the printing device is used as the printing proof device.

Normally, a company that retains a printing device and a company that designs LUTs for a printing proof device each retain a colorimetry device. This colorimetry device is also referred to as a chromatometer or a colorimeter. The company that designs the LUT measures the color of a color chart or the like using the company's own colorimetry device, generates data that combines the tones of a printed image by the printing device and a color reproduction image by the printing proof device using the obtained color value (colorimetry value), and the data is loaded in the printing proof device. The company that retains the printing device measures the color of an image printed by the printing device and a color reproduction image by the printing proof device using the company's own colorimetry device, and evaluates the printing proof device by comparing the obtained color values.

JP-A-2003-60928 discloses an image output system management method that generates four one-dimensional LUT format calibration tables respectively corresponding to CMYK for canceling out machine differences in the colorimetry devices. The calibration tables are incorporated in the output side of a printer profile. The printer profile is referenced when color converting the color value in which the color of an image is expressed to CMYK data, and an operation process known as an interpolation operation is performed during this color conversion. The calibration tables are referenced when amending the CMYK data, and the operation process known as an interpolation operation is performed during this amendment.

In the image output system management method, errors arise in the operation process known as an interpolation operation when referencing the printer profile, and errors also arise in the operation process known as an interpolation operation when referencing the calibration table. In order to realize strict color combination, it is desirable that the errors in the operation process be reduced.

The above problem is not limited to a technology that generates an LUT for an offset printer and a gravure printer, and is similarly present in various technologies.

<u>SUMMARY</u>

An advantage of some aspects of the invention is to improve color precision in a case of using a lookup table in which a usage amount of a coloring material of a printer and a usage amount of a coloring material of an image forming apparatus are associated.

According to an aspect of the invention, there is provided a method for generating a lookup table that generates a lookup table in which a usage amount of a first coloring material used in formation of a printed matter by a printer and a usage amount of a second coloring material used in formation of a color reproduction image by an image forming apparatus are associated, the method including a generating correction data that corrects a difference between a first colorimetry result in which color of an image printed matter formed with a printer is measured with a first colorimetry apparatus and a second colorimetry result in which color of the image printed matter is measured with a second colorimetry apparatus; and correcting a source lookup table so that a correspondence relationship between the usage amounts of the first and second coloring materials stipulated in the source lookup table and a correspondence relationship based on the colorimetry results by the first colorimetry apparatus by referencing the correction data to generate a lookup table.

In this case, since correction is performed such that the correspondence relationship between the usage amounts of the first and second coloring materials stipulated in the lookup table approaches the correspondence relationship based on the colorimetry results by the first colorimetry apparatus, the difference in the colorimetry results due to the difference in the colorimetry apparatuses according to the color conversion in which the generated lookup table is referenced is corrected. In so doing, a dedicated conversion process that corrects the differences in colorimetry results due to differences in the colorimetry apparatuses becomes unnecessary, and errors due to the dedicated conversion process do not arise. Accordingly, the aspect is able to provide a method for generating a lookup table in which color precision is able to be improved.

According to another aspect of the invention, there is provided a color conversion device including a storage unit that stores a lookup table in which a usage amount of a first coloring material used in formation of a printed matter by a printer and a usage amount of a second coloring material used in formation of a color reproduction image by an image forming apparatus are associated, generated by correcting a source lookup table so that a correspondence relationship between the usage amounts of the first and second coloring materials stipulated in the source lookup table approaches a correspondence relationship based on the colorimetry results by a first colorimetry apparatus by referencing the correction data that corrects a difference between a first colorimetry result in which color of an image printed matter formed with the printer is measured with the first colorimetry apparatus and a second colorimetry result in which color of the image is measured with a second colorimetry apparatus, and a color conversion unit that performs color conversion with reference to the lookup table.

In this case, since correction is performed such that the correspondence relationship between the usage amounts of the first and second coloring materials stipulated in the lookup table approaches the correspondence relationship based on the colorimetry results by the first colorimetry apparatus, the difference in the colorimetry results due to the difference in the colorimetry apparatuses according to the color conversion is corrected. In so doing, since errors due to the dedicated conversion process that corrects differences in the colorimetry results due to differences in the colorimetry apparatuses do not occur, the aspect is able to provide a color conversion device in which color precision is able to be improved.

The aspects of the invention are further applicable to a lookup table, a computer readable medium on which the lookup table is recorded, an image forming apparatus in which the lookup table is loaded, a lookup table generating device provided with a unit corresponding to the method for generating a lookup table, an image generation system provided with an image forming apparatus, a program that causes a computer to realize functions corresponding to each portion of the above devices or system, a computer readable medium on which the program is recorded, or the like. The above-described devices and system are may be configured by a plurality of distributed parts.

BRIEF DESCRIPTION OF THE DRAWINGS

Embodiments of the invention will now be described by way of example only with reference to the accompanying drawings, wherein like numbers reference like elements.

Fig. 1 is a drawing schematically showing an example of a configuration of a proof system.
Fig. 2 is a drawing schematically showing an example of a configuration of a proof system that corrects errors between colorimetry apparatuses.
Fig. 3 is a drawing schematically showing an example of a structure of a lookup table and a source lookup table.
Fig. 4 is a drawing schematically showing an example of a structure of a colorimetry value correction table database that includes correction data.
Fig. 5 is a block diagram schematically showing an example of a configuration of a host device.
Fig. 6 is a flowchart showing an example of a first colorimetry results acquisition process performed by a printing system.
Fig. 7 is a flowchart showing an example of a lookup table generation process performed by the image generation system.
Fig. 8 is a flowchart showing an example of a lookup table generation process performed by the image generation system.
Fig. 9 is a drawing showing an example of a setting screen.
Fig. 10 is a drawing schematically showing an example of generating correction data.
Fig. 11A is a drawing schematically showing an example of a structure of an input profile. Fig. 11B is a drawing schematically showing an example of a structure of an output profile. Fig. 11C is a drawing schematically showing an example of a structure of an intermediate lookup table. Fig. 11D is a drawing schematically showing an example of a structure of a source lookup table.
Fig. 12A is a drawing schematically showing an example of a structure of an input profile. Fig. 12B is a drawing schematically showing an example of a structure of an output profile. Fig. 12C is a drawing schematically showing an example of a structure of a source lookup table. Fig. 12D is a drawing schematically showing an example of a structure of a final lookup table.
Fig. 13 is a drawing schematically showing an arrangement example of selection lattice points for each usage amount of a third coloring material.
Fig. 14 is a drawing illustrating a calculated example for calculating a color value based on a spectral reflectivity.

Fig. 15 is a drawing schematically showing an example of a flow of a process that optimizes an ink amount set.

Fig. 16 is a drawing schematically showing the condition of optimizing an ink amount set.

Fig. 17 is a flowchart showing an example of a color reproduction image output control process performed by the image forming apparatus.

Fig. 18 is a drawing schematically showing an example of a structure of a spectral reflectivity database.

Figs. 19A and 19B are drawings schematically showing an example of a spectral Neugebauer model.

Figs. 20A to 20C are drawings schematically showing an example of a cellular Yule-Nielsen spectral Neugebauer model.

Fig. 21 is a drawing schematically showing a condition of adjusting the graininess of a color reproduction image during generation of the source lookup table.

Fig. 22 is a drawing schematically showing a condition of adjusting the gradation of a color reproduction image during generation of the source lookup table.

DESCRIPTION OF EXEMPLARY EMBODIMENTS

Below, embodiments of the invention will be described. Naturally, the following embodiments are merely examples of the invention, and there is no limitation that all of the characteristics shown in the embodiments be essential to the means of solving the problem of the invention.

1. Outline of Present Technology

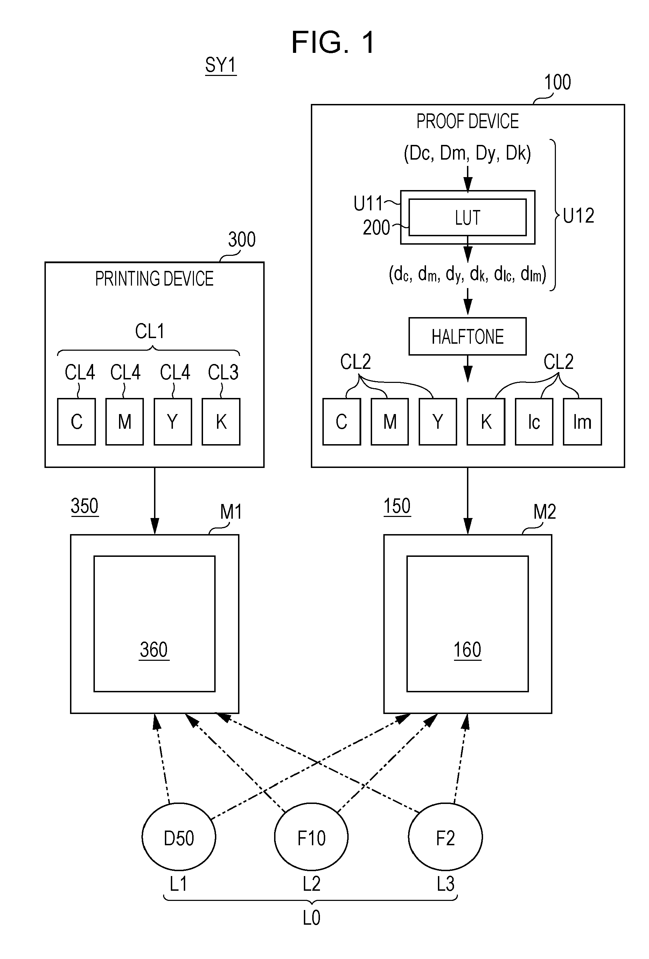

Firstly, the outline of the present technology will be described with reference to Figs. 1 to 22.

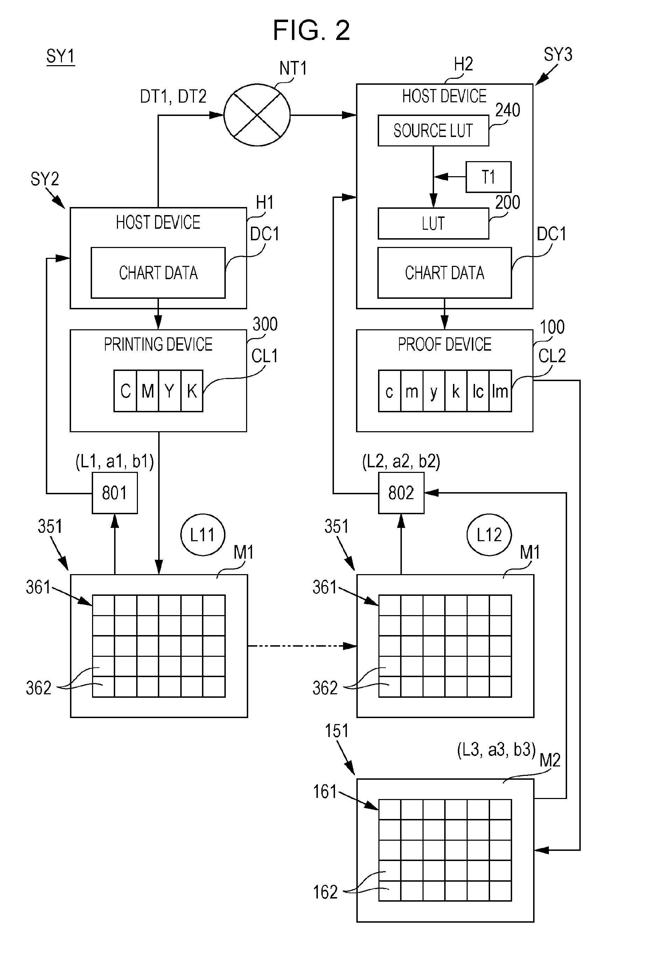

The method for generating a lookup table (LUT) of the technology generates an LUT 200 in which the usage amount (for example, Dc, Dm, Dy, Dk) of a first coloring material CL1 used in formation of the printed matter 350 by a printer (printing device 300), and the usage amount (for example, $d_c$, $d_m$, dy, $d_k$, $d_{lc}$, $d_{lm}$) of a second coloring material CL2 used in formation of a color reproduction image 160 by an image forming apparatus (proof device 100) are associated. In the correction data generation step (U1) included in the method for generating the LUT, correction data (colorimetry value correction table T1) that corrects differences between the first colorimetry results (for example, L1, a1, b1) in which the color of the image printed matter (351) formed by the printer (300) is measured with a first colorimetry apparatus (colorimetry device 801) and the second colorimetry results (for example, L2, a2, b2) in which the color of the image printed matter (351) is measured with a second colorimetry apparatus (colorimetry device 802)(see fig. 2). In the source lookup table (source LUT) correction step (U2) included in the method for generating the LUT, the LUT 200 is generated by correcting the source LUT 240 such that the correspondence relationship between the usage amounts of the first and second coloring materials CL1 and CL2 stipulated in the source LUT 240 approaches the correspondence relationship based on the colorimetry results by the first colorimetry apparatus (801) by referencing the correction data (T1).

By correction being performed such that the correspondence relationship between the usage amounts of the first and second coloring materials CL1 and CL2 stipulated in the LUT 200 approaches the correspondence relationship based on the colorimetry results by the first colorimetry apparatus (801), the difference in the colorimetry results due to the difference in the colorimetry apparatuses if color conversion is performed with reference to the generated LUT 200 is corrected. Therefore, it is unnecessary to perform a dedicated conversion process that corrects the differences in colorimetry results according to differences in the colorimetry apparatuses, and errors due to the dedicated conversion process do not arise. In contrast, the image output system management method disclosed in JP-A-2003-60928 becomes a mechanism able to correct not only errors between colorimetry devices, but also color matching errors. In order to realize strict color matching, a two-stage interpolation operation that is color conversion in which a printer profile is referenced and a data amendment in which a one-dimensional calibration table is referenced is necessary, and, therefore interpolation operation errors occur at two locations.

Accordingly, the aspects of the technology are able to provide a method for generating an LUT able to improve color precision in a case of using a LUT 200 in which the correspondence relationship between the usage amount of the coloring material in the printer (300) and the usage amount of a coloring material of an image forming apparatus (100) is stipulated.

The storage unit U11 provided in the color conversion apparatus of the technology stores the LUT 200 in which the usage amount of the first coloring material CL1 and the usage amount of the second coloring material CL2 are associated. The storage unit U11 stores the LUT 200 which is generated by correcting the source LUT 240 such that the correspondence relationship between the usage amounts of the first and second coloring materials CL1 and CL2 stipulated in the source LUT 240 approaches the correspondence relationship based on the colorimetry results by the first colorimetry apparatus (801) by referencing the correction data (T1). The color conversion unit U12 provided in the color conversion apparatus performs color conversion with reference to the LUT 200.

By correction being performed such that the correspondence relationship between the usage amounts of the first and second coloring materials CL1 and CL2 stipulated in the lookup table 200 approaches the correspondence relationship based on the colorimetry results by the first colorimetry apparatus (801), the difference in the colorimetry results due to the difference in the colorimetry apparatuses according to the color conversion is corrected. Therefore, errors do not arise due to a dedicated conversion process that corrects the differences in colorimetry results according to differences in the colorimetry apparatuses. Accordingly, the aspects of the technology are able to provide a color conversion device able to improve color precision in a case of using a LUT 200 in which the correspondence relationship between the usage amount of the coloring material in the printer (300) and the usage amount of a coloring material of an image forming apparatus (100) are stipulated.

The first coloring material CL1 may be a coloring material used in the formation of the printed matter 350 by the printer (300), and, in addition to coloring materials in which four colors known as CMYK are combined, a coloring material in which five or more colors are combined and a coloring material in which three or fewer colors are combined are included. The second coloring material CL2 may be a coloring material used in formation of the color reproduction image 160 by the image forming apparatus (100), and in addition to a coloring material in which five or more colors are combined, a coloring material in which four or fewer colors are combined is included.

Data that indicates a difference between the first colorimetry results and the second colorimetry results and data indicating the combination of the corresponding first colorimetry results and the second colorimetry results, and the like are included in the correction data.

Even though it is preferable that the colorimetry results be a device independent color space (device independent), and the color value be from a uniform color space, a device dependent color space (device dependent color space) is possible and a color value of a color space that is not a uniform color space is also possible. The device independent uniform color space may be the CIE (International Commission on Illumination) L*u*v* color space, in addition to the CIE L*a*b* color space. L* in the L*a*b* color space indicates the brightness and the a* and b* indicate the hue and the saturation. In the example in Fig. 2 or the like, the first colorimetry results are indicated by the L*a*b* color space color value (L1, a1, b1) and the second colorimetry results are indicated by a L*a*b* color space color value (L2, a2, b2). The same applies in the description below.

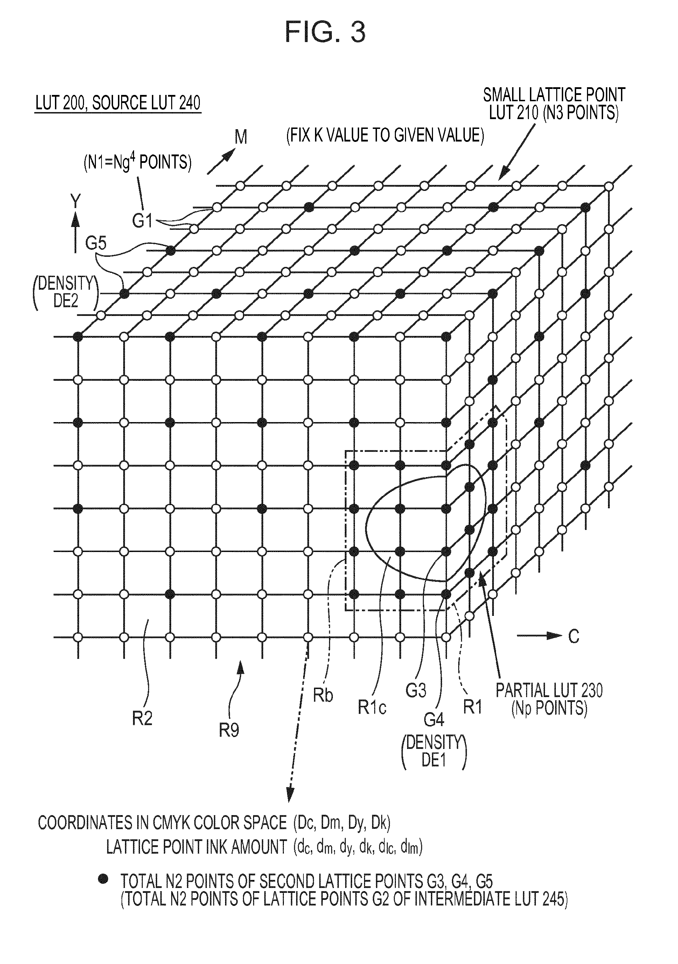

The LUT 200 preferably stipulates the correspondence relationship between the usage amounts of the first and second coloring materials CL1 and CL2 for a plurality of first lattice points G1 included in the input color space (for example, CMYK color space) represented by the color of the first coloring material CL1 (see fig. 3). In the correction data generating step (U1), the printed matter 351 of the color chart 361 having a color patch 362 corresponding to second lattice points G2 (shown in Fig. 3 as solid dots) that are at least a part of the first lattice points G1 is preferably used as the image printed matter. In the aspect, since the correspondence relationship between the usage amounts of the coloring materials stipulated for the lattice points in LUT 200 is corrected so as to approach the correspondence relationship based on the colorimetry results by the first colorimetry apparatus (801), it is possible to provide a method for generating an LUT in which the color precision is able to be further improved.

In the correction data generation step (U1), the printed matter 351 of the color chart 361 in which a color patch 362 associated with the second lattice points G2 with a higher density DE1 in the first region R1 than density DE2 of the second lattice points G2 in the second region R2 other than the first region R1 including the specified color (R1c) in the input color space is preferably used as the image printed matter. In the aspect, since the correspondence relationship between the usage amounts of the coloring materials stipulated for the second lattice points G2 in which the density DE1 in the first region R1 including the specified color (R1c) is higher than the density DE2 in the second region is corrected so as to approach the correspondence relationship based on the colorimetry results by the first colorimetry apparatus (801), it is possible to provide a method for generating an LUT in which the color precision is able to be further improved.

Examples of the specified color (specified color region R1c) include skin tones and grey. Accordingly, examples of the first region R1 include a region including skin tones and a region including grey. Skin tones and grays are representative examples of colors the human eye is sensitive to. The input color space preferably includes a plurality of specified colors (R1c). The first and second regions R1 and R2 may be a collection of non-contiguous parts.

The density of the second lattice points G2 is indicated by the number of second lattice points G2 for each unit amount of the input color space. For example, if the input color space is a three-dimensional color space, the density of the second lattice points G2 is indicated by the number of second lattice points G2 for each unit amount of the input color space. If the input color space is four-dimensional or more, the color space may be expressed by the number of second lattice points G2 in the predetermined range of each coloring material usage amount.

The method for generating an LUT of the technology may include a source LUT generating step (U3) for generating a source LUT 240 by stipulating a correspondence relationship between the usage amounts of the first and second coloring materials CL1 and CL2 based on second colorimetry results (L2, a2, b2) in which the color of the color chart 361 is measured with the second colorimetry apparatus (802). Since the aspect may use the second colorimetry apparatus (802) in order to generate the LUT 200, it is possible to provide a method for generating an LUT able to easily generate the LUT 200.

The source LUT correction step (U2) may include a second color chart generating step (U21) for forming a second color chart 161 as a color reproduction image 160 by converting the chart data DC1 for forming the printed matter 351 of the color chart 361 with the printer (300) according to the source LUT 240. The source LUT correction step (U2) may include a third colorimetry result acquisition step (U22) that acquires third colorimetry results (for example, L3, a3, b3) by measuring the color of the second color chart 161 with the second colorimetry apparatus (802). The source LUT correction step (U2) may further include a third colorimetry result conversion step (U23) that converts the colorimetry results (for example, L3, a3, b3) based on the correction data (T1) to colorimetry results (for example, L4, a4, b4) by the first colorimetry apparatus (801). The source LUT correction step (U2) may further include a difference correction step (U24) that corrects the source LUT 240 so as to fall within a predetermined standard in a case in which the difference between the converted colorimetry results (L4, a4, b4) and the first colorimetry results (L1, a1, b1) exceeds the standard. In the aspect, the third colorimetry results (L3, a3, b3) in which the color of the second color chart 161 formed by the image forming apparatus (100) is measured with the second colorimetry apparatus (802) are converted to colorimetry results (L4, a4, b4) using the first colorimetry apparatus (801). Since the correspondence relationship of the lookup table 200 is stipulated such that the difference between the converted colorimetry results (L4, a4, b4) and the first colorimetry results (L1, a1, b1) in which the color of the color chart 361 formed by the printer (300) is measured with the first colorimetry apparatus (801) falls within a standard, the aspect is able to provide a method for generating a lookup table able to further improve color precision.

The source LUT generation step (U3) may include a profile generating step (U31) in which the usage amount of the first coloring material CL1 and the target color value based on the second colorimetry results (L2, a2, b2) are associated. The source LUT generation step (U3) may include a prediction step (U32) that predicts the usage amount of the second coloring material CL2 such that the color value of the second coloring material CL2 formed in the color reproduction image 160 measured using the second colorimetry apparatus (802) approaches the target color value. The source LUT generation step (U3) may further include a predicted usage amount association step (U33) that generates the source LUT 240 by associating the usage amount of the first coloring material CL1 with the predicted usage amount of the second coloring material CL2. The source LUT correction step (U2) preferably further corrects the source LUT 240 by amending the target color value so as to fall within the standard in a case in which the difference between the converted colorimetry results (L4, a4, b4) and the first colorimetry results (L1, a1, b1) exceeds the standard. Since the aspect is able to correct the source LUT 240 by amending the target color value for generating the source LUT 240, it is possible to provide a method for generating an LUT able to more easily generate the LUT 200.

The method for generating an LUT of the technology may further include a usage model acquisition step (U4) that acquires the usage model information DT2 that indicates the usage model used for generating the LUT 200 from among a plurality of models included in the first colorimetry apparatus (801). The correction data generation step (U1) preferably generates the correction data (T1) according to the model for each of the plurality of models. In the LUT correction step (U2), the LUT 200 is preferably generated by correcting the source LUT 240 such that the correspondence relationship between the usage amounts of the first and second coloring materials CL1 and CL2 stipulated in the source LUT 240 approaches the correspondence relationship based on the colorimetry results according to the usage model by referencing the correction data (T1) according to the usage model represented by the acquired usage model information DT2. It is possible for the aspect to provide a method for generating an LUT able to improve the color precision by matching the model of the colorimetry apparatus.

The method for generating an LUT of the technology may further include a printing condition acquisition step (U5) that acquires the printing conditions DT1 for generating the LUT 200 from among a plurality of printing conditions DT1 able to be set with respect to the formation of the printed matter 350. In the correction data generation step (U1), the correction data (T1) is preferably generated for each combination of printing conditions DT1 and the model according to the printing conditions DT1 and model that configure the combination. In the LUT correction step (U2), the LUT 200 is preferably generated by correcting the source LUT 240 such that the correspondence relationship between the usage amounts of the first and second coloring materials CL1 and CL2 stipulated in the source LUT 240 approaches the correspondence relationship based on the colorimetry results according to the usage model by referencing the correction data (T1) according to the combination of the acquired printing conditions DT1 and the usage model represented by the acquired usage model information DT2. It is possible for the aspect to provide a method for generating an LUT able to improve the color precision by matching the combination of the printing conditions DT1 and the model of the colorimetry apparatus set with respect to the formation of the printed matter 350.

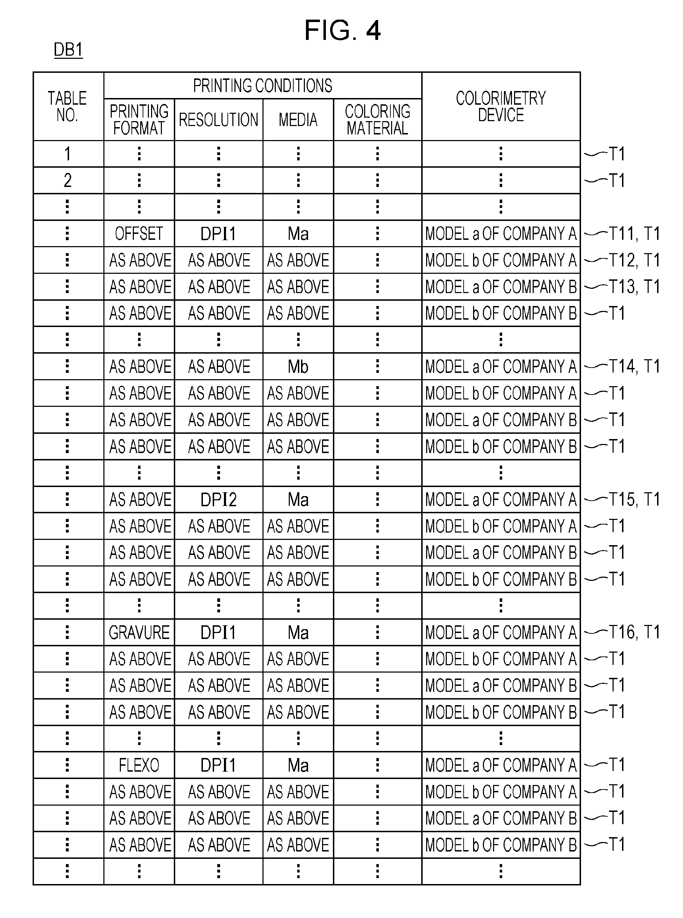

Examples of the printing conditions DT1 include, as shown in Fig. 4, the printing format, which may be offset printing, gravure printing, or flexo printing, the resolution of the printed image 360 formed in the printed matter 350, and the type or printing medium, and the type of first coloring material CL1.

In the correction data generating step (U1), the correction data (T1) is preferably generated using an image printed matter (351) formed with the printer (300) for each of a plurality of printing conditions DT1 able to be set with respect to formation of the printed matter (350). It is possible for the aspect to provide a method for generating an LUT able to improve the color precision by matching the combination of the printing conditions DT1 set with respect to the formation of the printed matter 350.

2. Outline of Specific Example Proof System

Fig. 1 schematically shows an example of a proof system SY1 that forms, with a proof device (image forming apparatus) 100, a proof 150 of the printed matter 350 formed with the printing device (printer) 300. When printed matter is formed directly by the printing device and the tone or the like is verified, high costs are incurred. In order to be able to verify the tone or the like of the printed image 360 on the printed matter 350 even without forming the printed matter 350, the proof device 100 forms a color reproduction image 160 of the printed matter 350.

An offset printer, a gravure printer, and a flexo printer, and the like, are included in the printing device (printer) 300. The printing device 300 shown in Fig. 1 forms the printed image 360 on the printing medium M1 by using CMYK (cyan, magenta, yellow, black) first coloring materials CL1. The first coloring material CL1 includes a K coloring material (third coloring material CL3), and a CMY coloring material (fourth coloring material CL4) that are substitutable for and match the color (K) of the coloring material CL3.

An ink jet printer, a wire dot printer, a laser printer a line printer, a copy device, a facsimile, and a composite device in which a portion of these is combined is included in the proof device (image forming apparatus) 100. The proof device 100 shown in Fig. 1 includes a color conversion device, and forms a color reproduction image 160 on the printing medium M2 using the CMYKlclm second coloring material CL2. The light cyan (lc) is a brighter color than cyan with the same system hue as cyan. Light magenta (lm) is a brighter color than magenta with the same system hue as magenta. Naturally, the second coloring material CL2 may be a CMYKROrGr coloring material or the like. Red (R), orange (Or) or green (Gr) are colors substitutable for CMY. The proof device 100 shown in Fig. 1 converts each usage amount Dc, Dm, Dy, and Dk of the CMYK first coloring material CL1 to each usage amount $d_c$, $d_m$, dy, $d_k$, $d_{lc}$, and $d_{lm}$ of the CMYKlclm second coloring material CL2 according to the lookup table (LUT) 200, and forms a color reproduction image 160 according to the obtained usage amounts $d_c$, $d_m$, dy, $d_k$, $d_{ic}$, and $d_{lm}$. The reference U11 is a storage unit in a case in which the LUT 200 is stored in the proof device 100, and the reference U12 is a color conversion unit in the case in of being provided in the proof device 100.

In a case of converting the ink usage amount to dots on the printing medium M2, the number of gradations in the gradation data is reduced by performing a predetermined halftone process such as a dither method, an error dispersion method or a concentration pattern method with respect to the gradation data indicating each usage amount $d_c$, $d_m$, dy, $d_k$, $d_{lc}$, and $d_{lm}$ and ink dots are formed on the printing medium M2 by discharging ink droplets according to the obtained multivalue data. Multivalue data is data indicating the formation state of the dots, and may be binary data indicating the presence or absence of dot formation, or may be multivalue data of three gradations or more able to correspond to different sizes of dots, such as each of small, medium, and large dots. It is possible for the binary data to be data in which dot formation corresponds to 1 and no dot corresponds to 0. It is possible for the four value data to be data in which large dot formation corresponds to 3, medium dot formation to 2, small dot formation to 1 and no dot to 0. The obtained color reproduction image expresses the formation state of dots on the printing medium M2.

The LUT 200 in which the correspondence relationship between each usage amount Dc, Dm, Dy, and Dk of the first coloring material CL1, and each usage amount $d_c$, $d_m$, dy, $d_k$, $d_{lc}$, and $d_{lm}$ of the second coloring material CL2 is stipulated is referred to as a color conversion LUT from the point of converting device dependent CMYK four-dimensional color space data to proof device dependent CMYKlclm color space data. The LUT 200 is referred to as a color part plate LUT from the point of converting the usage proportions of the CMY and K, converting the usage proportions of C and lc, and converting the usage proportions of M and lm.

The printed image 360 and color reproduction image 160 change in tone according to the type of observation light source L0. The reference L0 is used collectively for the individual light sources L1 to L3. A D50 light source, a D55 light source, a D65 light source, a D75 light source, an A light source, an F2 light source, an F7 light source, an F10 light source, an F11 light source and the like are included in the normalized observation light source L0. Changes in tone depend on the type of coloring material.

For example, in the printing industry, the D50 light source is a standard light source showing no spectral distribution in actual illumination. In order to see printing capacity under a D50 light source, it is important to ensure the color precision when viewing with standard D50 light source as the proof device of the printing device. Meanwhile, the environment in which the printed matter by the printing device and the color reproduction image by the proof device are actually viewed is assumed to have a light source different to the D50 light source, and an environment in which a plurality of light sources is mixed, such as an environment in which a D65 light source and an A light source are mixed is assumed. The technology is able to guarantee color precision when viewed with a standard D50 light source while obtaining an excellent metameric matching function when an observation light source when viewed in practice.

Fig. 2 schematically shows an example of a proof system SY1 that includes a printing system SY2 constructed by a printing company that retains a printing device 300 and an image generation system SY3 constructed by a manufacturing company that designs the LUT 200 of the printing proof device 100. In the case of the LUT 200 being delivered to printing company, the printing company becomes a customer of the proof device manufacturing company. The printing system SY2 includes a host device H1 and a colorimetry device (first colorimetry apparatus) 801, in addition to the printing device 300. The image generation system SY3 includes a host device H2 and a colorimetry device (second colorimetry apparatus) 802, in addition to the proof device 100. There is demand for high color precision in the proof device, but when there are device differences between colorimetry devices, the color precision is lowered. Even though there is a function of calibrating by measuring the color of several tens of color tiles that are an absolute color standard in the colorimetry device itself, the errors in the colorimetry values for limited coloring materials are reduced but the errors in the colorimetry value with respect to all coloring materials are not reduced.

It is possible for the proof system SY1, as a unit that resolves the device difference (for example, model device difference) between colorimetry devices, to realize an ink jet proof in which the inspection quality within the required standard is secured by limiting the colorimetry chart (color chart 361) used in the formation of the colorimetry value correction table T1 to the target printer output material (color chart printed matter 351) during LUT design. The main proof system SY1 has a function for creating a colorimetry value correction table T1 for converting the colorimetry value between colorimetry apparatuses by comparing the colorimetry results in which the color of a single target printed matter that is a printing reproduction objective of the LUT design is measured by a plurality of colorimetry devices 801 and 802. Accordingly, it is possible to provide an ink jet proof device with the best color precision with respect to the customer, possible to eliminate mis-matches in the image detection results according to device differences in the colorimetry devices used by an LUT designer on the customer side, and possible to provide an LUT 200 in which reliability is obtained for the customer.

The host device H1 of the printing system SY2 is a computer that controls the overall printing system, the printing device 300 and the colorimetry device 801 are connected and data is able to be transmitted and received with respect to an external device such as a host device H2 via a communication network NT1, such as the Internet. The printing device 300 is able to form a printed matter 351 of a color chart 361 having a plurality of patches 362. The printed matter 351 forms a color chart 361 in which a plurality of patches 362 is lined up two-dimensionally on the printing medium M1. The patch is also called a color chip, and signifies a region that is a colorimetry unit for the colorimetry device. The colorimetry device 801 is a standard colorimetry apparatus and is able to output first colorimetry results (L1, a1, b1) that become a standard by measuring the color of each patch 362 under the set observation light source L11 to the host device H1. The host device H1 is able to output first colorimetry results acquired from the colorimetry device 801 as is or processed to the host device H2.

The host device H2 of the printing system SY3 is a computer that controls the overall image generation system, the proof device 100 and the colorimetry device 802 are connected and data is able to be transmitted and received with respect to an external device such as the host device H1 via the communication network NT1. The proof device 100 is able to form a printed matter 151 of a second color chart 161 having a plurality of patches 162. The printed matter 151 forms a second color chart 161 in which a plurality of patches 162 is lined up two-dimensionally on the printing medium M2. The colorimetry device 802 measures the color of the color chart 361 formed by the printing device 300 and a second color chart 161 formed by the proof device 100. The color chart 361 is used in correction between colorimetry devices, and forms the printing medium M1 matching the printing conditions DT1 in the printing device 300 that is a color reproduction objective for securing high color precision of the output image (color reproduction image 160) in which the LUT 200 is referenced.

The colorimetry device 802 outputs the second colorimetry results (L2, a2, b2) by measuring the color of each patch 362 under the set observation light source L12 to the host device H2, when measuring the color of the color chart 361. The colorimetry device 802 is able to output the third colorimetry results (L3, a3, b3) by measuring the color of each patch 162 under the set observation light source L12 to the host device H2, when measuring the color of the second color chart 161. The host device H2 generates the colorimetry value correction table (correction data) T1 based on the first colorimetry results received from the printing system SY2 and the second colorimetry results acquired from the colorimetry device 802, and generates a final LUT (final LUT) 200 by correcting the source LUT 240 by referencing the table T1.

The first colorimetry results may also be recorded on a computer readable recording medium by the printing system SY2 and read out from the recording medium by the host device H2 in addition to being sent via the communication network.

3. Outline of Structure of Lookup Table

Fig. 3 schematically shows the structure of the LUT 200 and the source LUT 240 used in the specific example. The input of the LUT 200 and 240 is four dimensional CMYK, and, therefore, is not shown. The LUTs 200 and 240 are schematically shown in a three-dimensional form in which one given dimension is fixed to one point, and, in Fig. 3, the lattice points (first lattice points) G1 of the LUT 200 and 240 are shown in a CMY three-dimensional space by fixing the K value to a given value. For example, in a case of providing the lattice points of Ng steps (Ng is an integer of 2 or more) for each of the usage amounts of CMYK, the number of lattice points is $Ng^4$. In a case in which $Ng = 17$, the number of lattice points is $N1 = 17^4 = 83521$. Since the usage amount of K has Ng steps, the CMY three-dimensional space has Ng units therein, as shown in Fig. 3.

"Lattice points" is a generally used term signifying input point stipulated in an LUT, and there is no special limitation on the arrangement if corresponding to the coordinates of the input color space. Accordingly, the plurality of lattice points is preferably not only uniformly arranged in the input color space, but also preferably non-uniformly arranged at different positions for each of CMYK in the input color space.

As shown in Fig. 3, the coordinates (position) of the lattice points G1 in the CMYK color space indicate each usage amount Dc, Dm, Dy, and Dk of the first coloring material CL1. The lattice point ink amounts (each usage amount of second coloring material CL2) $d_c$, $d_m$, dy, $d_k$, $d_{lc}$, and $d_{lm}$ are stored in each lattice point G1. In this way, the correspondence relationship between the usage amount of the CMYK coloring material CL1 and the usage amount of the CMYKlclm coloring material CL2 is stipulated for each lattice point G1 in the LUT 200.

Obtaining the CMYKlclm coloring material such that the tones between the printed image 360 and the color reproduction image 160 match for the $17^4$ lattice points G1 by preparing and measuring the color of $17^4$ color patches for creating the LUT incurs extraordinary labor. Although this case is also included in the technology, the CMYKlclm coloring material amount may be obtained for N2 second lattice points G2 by reducing the number of color patches N2 measured to be lower than the number of final lattice points N1, and the CMYKlclm coloring material amount is preferably obtained for the final N1 lattice points G1 by an interpolation operation. Below, description is provided according to this concept.

Although evenly arranging the second lattice points G2 in the comprehensive region R9 of the entire CMYK input color space is included in the invention, the second lattice points G2 shown in Fig. 3 are arranged comparatively frequently in the first region R1 that includes the stored colors, such as skin tones or gray, in the comprehensive region R9. The stored color is a specified color of the technology, and is a color with a high degree of priority with respect to color precision. The specified color region R1c indicates a region showing the specified color in the comprehensive region R9, and the first region R1 indicates a region up to the neighboring lattice point G4 for interpolating the output usage amount $d_c$, $d_m$, dy, $d_k$, $d_{lc}$, and $d_{lm}$ with respect to the input usage amount Dc, Dm, Dy, Dk of the specified color region R1c. The reference Rb indicates the boundary part of the first region R1. The lattice points G3 of the specified color region R1c and the neighboring lattice points G4 included in the boundary part Rb are used in color conversion of the specified color region R1c. These lattice points G3 and G4 are referred to as specified color reference lattice points. The Np first lattice points G1 in the first region R1 shown in Fig. 3 are all of the specified color reference lattice points G3 and G4. Although the first lattice points G1 in the second region R2 from the comprehensive region R9 other than the first region R1 are also selection lattice points G5 included in the second lattice points G2, more lattice points are not included in the second lattice points G2. As a matter of convenience, in all of the comprehensive region R9 also including the first region R1, the virtual LUT in which the correspondence relationship between the input usage amount and the output usage amount for a smaller number of the selection lattice points G5 than the N1 of the first lattice points G1 is referred to as a small lattice point LUT 210, and the virtual LUT in which the correspondence relationship between the input usage amount and the output usage amount for Np specified color reference lattice points G3 and G4 included in the first region R1 is referred to as a partial LUT 230. The characteristics of the small lattice point LUT 210 are described later. The lattice points G3 and G4 of the partial LUT 230 are densely arranged in the first region R1 including the specified color. This is in order for the specified color to which the human eye is sensitive to be color converted with especially good precision.

The density of the second lattice points G2 of the four-dimensional CMYK color space is able to be defined by the number of second lattice points G2 present for each unit volume (unit amount) in the three-dimensional CMYK color space when the K value is fixed to a given value. Artificially, the proportion NR2/NR1 of the second lattice points G2 (set to NR2) from the first lattice points G1 (set to NR1) in a given area may be set as the density. In the example in Fig. 3, the density DE1 of the second lattice points G2 in the first region R1 is 1 (100%), and the density DE2 of the second lattice points G2 in the second region R2 is lower than 0.5 (50%). That is, the density DE1 of the second lattice points G2 in the first region R1 is higher than the density DE2 of the second lattice points G2 in the second region R2. The color of each patch 362 that configures the color chart 361 corresponds to the second lattice points G2 in which the density is biased to DE1 > DE2. In this way, by making the color of the position of the second lattice points G2 into a color patch, interpolation errors when optimizing the ink amount of the color patch are eliminated, and, as a result, color precision guaranteed by the LUT is improved. By adding the colors of the specified color reference lattice points G3 and G4 necessary for reproduction of the specified color important to the color reproduction to the color chart, the number of patches encompassing the CMYK color space is reduced.

The first region R1 and the second region R2 may indicate different output characteristics. "Characteristics" indicates the overall tendencies. "Output characteristics" signifies the overall output tendencies in the region, for example, at least one of the color difference between the color value of the first coloring material and the color value of the second coloring material, an index value indicating the graininess of the color reproduction image, and an index value indicating the gradation properties of the color reproduction image. In a case in which the color value of the first coloring material is represented by $L_D$, $a_D$, $b_D$ and the color value of the second coloring material is represented by $L_d$, $a_d$, $b_d$, the color difference $\Delta E$ may be calculated by $\Delta E = \{(L_d-L_D)^2 + (a_d-a_D)^2 + (b_d-b_D)^2\}^{1/2}$, or may be calculated based on the color difference formula ($\Delta E_{2000}$) of CIE DE 2000.

A plurality of first regions R1 is preferably provided in the LUT, and each region R1 preferably indicates different output characteristics.

As described above, the manufacturing company that creates the LUT 200 retains a different colorimetry device 802 to the colorimetry device 801 at the printing company. Therefore, although an LUT using the colorimetry results by the colorimetry device 802 is designed, a device difference between the colorimetry devices 801 and 802, that is, a difference in the colorimetry results by the colorimetry devices 801 and 802 may arise. In order to realize a strict color match, it is necessary to consider the device difference between colorimetry devices. As shown in Fig. 2, the colorimetry value correction table (correction data) T1 that corrects the difference between the first colorimetry results (L1, a1, b1) in which the color of the color chart 361 is measured by the colorimetry device 801 of the printing system SY2 and the second colorimetry results (L2, a2, b2) in which the color of the color chart 361 is measured by the colorimetry device 802 of the image generation system SY3 is prepared. The technology generates the final LUT 200 by correcting the source LUT 240 by referencing the colorimetry value correction table T1.

Fig. 4 schematically shows an example of the structure of a colorimetry value table correction database DB1 in which the colorimetry value correction table T1 is gathered. In the database DB1, the colorimetry value correction table T1 is stored according to the printing conditions DT1 and the model that configures the combination for each combination of printing conditions DT1 able to be set with respect to formation of the printed matter 350 and model included in the first colorimetry apparatus that is a standard. Although the printing format, resolution, type of medium (printing medium), and type of first coloring material CL1 are included in the printing conditions DT1 shown in Fig. 4, the type of coloring material CL1 is not shown. Model in Fig. 4 includes the maker and model of the colorimetry device. For example, the table T11 shown in Fig. 4 is a colorimetry value correction table for a case in which the printing format is offset printing, the resolution is DPI1, the type of medium is Ma, and the model of the colorimetry device 801 is model a by company A. Table 12 is the colorimetry value correction table in a case in which the printing conditions and the colorimetry device maker are the same as table T11 but the colorimetry device models are different. Table 13 is the colorimetry value correction table in a case in which the printing conditions are the same as table T11 but the colorimetry device makers are different. Table 14 is the colorimetry value correction table in a case in which the types of medium are different with the same printing format, resolution, and model as Table T11. Table 15 is the colorimetry value correction table in a case in which the resolutions are different with the same printing format, medium, and model as Table T11. Table 16 is the colorimetry value correction table in a case in which the printing formats are different with the same resolution, type of medium and model as Table T11.

The host device H2 shown in Fig. 2 receives usage model information DT2 that indicates the printing conditions DT1 used for generating LUT 200 and the usage model used for generating the LUT 200 from the printing system SY2. Moreover, the colorimetry value correction table T1 is searched for from the database DB1 according to the combination of the printing conditions DT1 and the usage model represented by the usage model information DT2, and if the corresponding colorimetry value correction table T1 is present, the LUT 200 is generated by correcting the source LUT 240 by referencing the table T1. If the corresponding colorimetry value correction table T1 is not present, once the colorimetry value correction table T1 is newly generated and registered in the database DB1, the LUT 200 is generated by correcting the source LUT 240 by referencing the colorimetry value correction table T1.

4. Outline of Lookup Table Generating Device and Color Conversion Device.

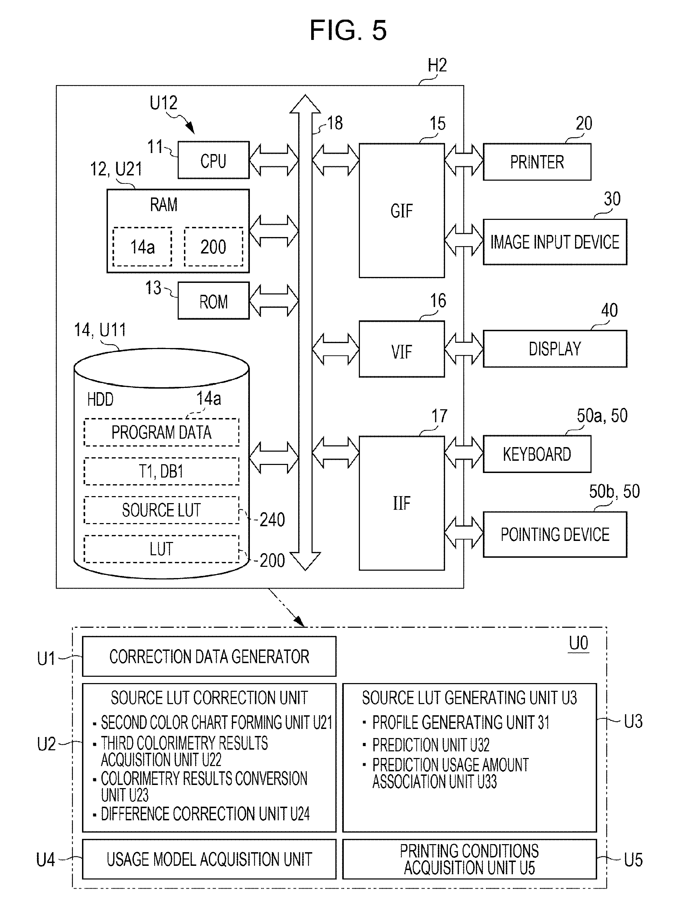

Fig. 5 shows an example of the configuration of the host device H2 that includes the lookup table (LUT) generating device U0. In the host device H2, a central processing unit (CPU) 11, a random access memory (RAM) 12, a read only memory (ROM) 13, a hard disk drive (HDD) 14, a general purpose interface (GIF) 15, a video interface (VIF) 16, an input interface (IFF) 17 or the like are connected to a bus 18, and thereby able to input and output information with one another. Program data 14a, or the like, for executing various programs including an operating system (OS) and an LUT generation program are stored on the HDD 14. The colorimetry value correction table database DB1, a source LUT 240, and a final LUT 200 or the like, are also stored on the HDD 14. The CPU 11 reads out program data 14a to the RAM 12, as appropriate, and controls the entire host device according to the program data 14a. The LUT generation program causes the host device H2 to realize functions according to each unit U1 to U5 of the LUT generating device U0, and the host device H2 to function as the LUT generating device U0.

A printer 20 that is an image output device and an image input device 30, such as a colorimetry device or scanner, or the like are connected to the GIF 15. It is possible for a universal serial bus (USB) or the like to be adopted in the GIF 15. The printer 20 may be a proof device 100 or may not be a proof device 100. A display 40 or the like that is an image output device is connected to the VIF 16. A keyboard 50a that is an operation input device 50, a pointing device 50b that is similarly an operation input device 50, or the like are connected to the IIF 17. It is possible to use a mouse or the like as the pointing device 50b.

The LUT generating device U0 shown in Fig. 5 includes a correction data generating unit U1, a source lookup table (source LUT) correction unit U2, a source lookup table (source LUT) generating unit U3, a usage model acquisition unit U4, and a printing conditions acquisition unit U5, and generates the LUT 200.

The correction data generation unit U1 generates the colorimetry value correction table T1.

The source LUT correction unit U2 includes a second color chart forming unit U21, a third colorimetry result acquisition unit U22, a colorimetry result conversion unit U23, and a difference correction unit U24, and generates the LUT 200 by correcting the source LUT 240. The second color chart forming unit U21 converts the chart data DC1 for forming the color chart 361 with the printing device 300 according to the source LUT 240, thereby forming the second color chart 161 as a color reproduction image 160. The third colorimetry result acquisition unit U22 acquires the third colorimetry results (L3, a3, b3) by measuring the color of the second color chart 161 with the colorimetry device 802. The colorimetry result conversion unit U23 converts the third colorimetry results (L3, a3, b3) based on the colorimetry value correction table T1 to colorimetry results (L4, a4, b4) by a standard colorimetry device 801. The difference correction unit U24 corrects the source LUT 240 so as to be within a standard in a case in which the difference between the converted colorimetry results (L4, a4, b4) and the first colorimetry results (L1, a1, b1) exceeds the standard. Finally, the LUT 200 is stored on the HDD 14.

The source LUT generating unit U3 includes a profile generating unit U31, a prediction unit U32, and a predicted usage amount association unit U33, and generates the source LUT 240 based on the second colorimetry results (L2, a2, b2) in which color of the color chart 361 formed by the printing device 300 is measured with the colorimetry device 802. The profile generating unit U31 associates the usage amount (for example, Dc, Dm, Dy, Dk) of the first coloring material CL1 with the target color value based on the second colorimetry results (L2, a2, b2). The prediction unit U32 predicts the usage amount (for example, $d_c$, $d_m$, dy, $d_k$, $d_{lc}$, $d_{lm}$) of the second coloring material CL2 such that the color value (for example, L*a*b* value) of the second coloring material CL2 formed in the color reproduction image 160 approaches the target color value for each observation light source L0, based on the evaluation value I (described later) in which the proximity to the target color value (for example, L*a*b* value) associated with the usage amount of the first coloring material CL1 is evaluated based on the observation light source L0. The predicted usage amount association unit U33 associates the usage amount of the first coloring material CL1 with the predicted usage amount of the second coloring material CL2, thereby generating the source LUT 240.

The usage model acquisition unit U4 acquires the usage model information DT2 representing the usage model for generating the LUT 200.

The printing condition acquisition unit U5 acquires the printing conditions DT1 used for generating the LUT 200.

The host device H2 shown in Fig. 5 reads out the LUT 200 stored on the HDD 14 to the RAM 12, and is able to execute color conversion from the usage amounts Dc, Dm, Dy, and Dk of the first coloring material CL1 to the usage amounts $d_c$, $d_m$, dy, $d_k$, $d_{lc}$, and $d_{lm}$ of the second coloring material CL2 with reference to the read out LUT 200. In this case, the color conversion device is included in the host device H2, the HDD 14 and RAM 12 configure the storage unit U11, and the host device H2 that executes the color conversion program included in the program data 14a configures the color conversion unit U12. Naturally, the color conversion device may be included in a separate computer to the LUT generating device U0.

The hardware configuration of the host device H1 included in the printing system SY2 is able to employ the same hardware configuration as the host device H2.


5. Lookup Table Generation Example

Next, a LUT 200 generation example will be described according to the method for generating an LUT of the technology.

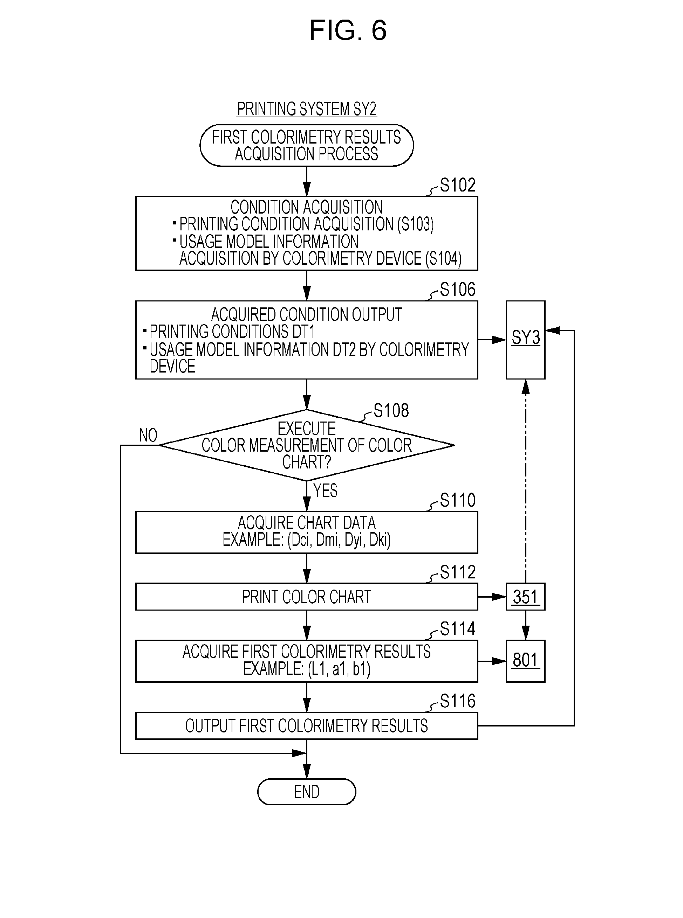

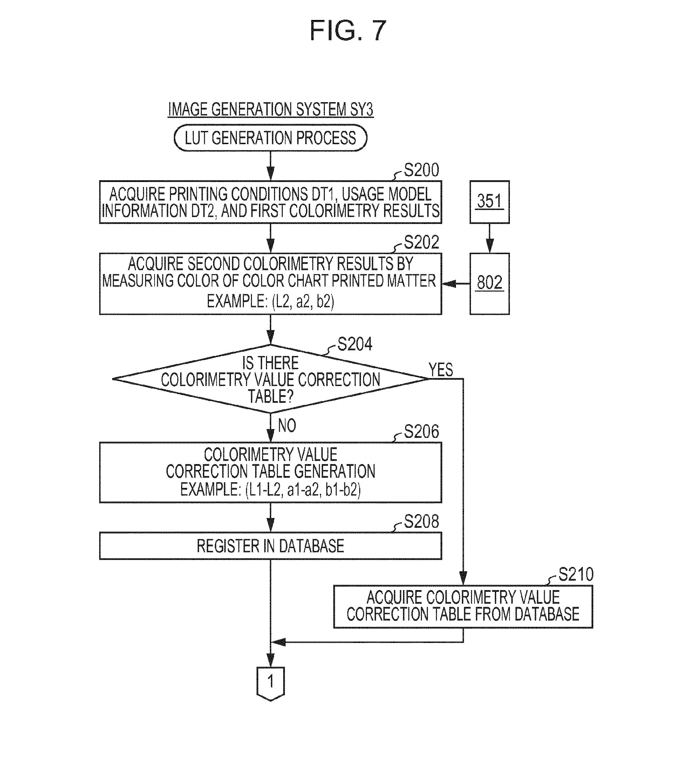

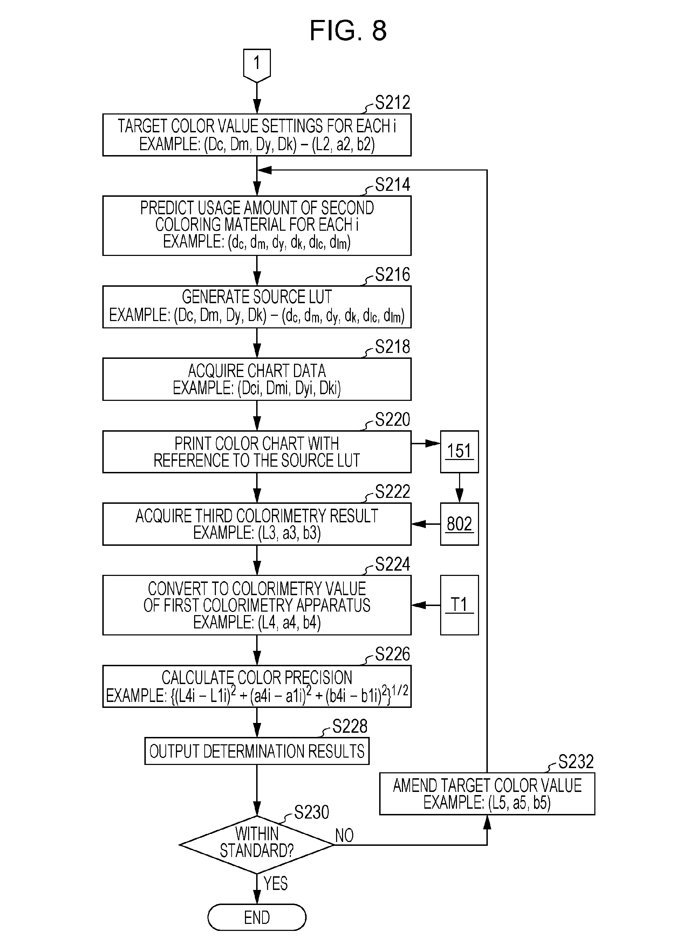

Fig. 6 shows a flowchart example of a first colorimetry results acquisition process performed by a printing system SY2 as the main configuration of the host device H. Figs. 7 and 8 show flowchart examples of an LUT generation process performed by the image generation system SY3 as the main configuration of the host device H2. Here, Steps S103 and S200 correspond to the printing conditions acquisition step, Steps S104 and S200 correspond to the usage model acquisition step, Steps S202 to S208 correspond to the correction data generation step, Step S212 corresponds to the profile generation step, Step S214 corresponds to the prediction step, Step S216 corresponds to the predicted usage amount association step, Steps S218 to S220 correspond to the second color chart formation step, Step S222 corresponds to the third colorimetry result acquisition step, Step S224 corresponds to the colorimetry results conversion step, and steps S226 to S232 correspond to the difference correction step. Below the term "Step" will not be included.

First, in the printing system SY2, the host device H1 acquires the printing conditions DT1 and the usage model information DT2 (S102 in Fig. 6).

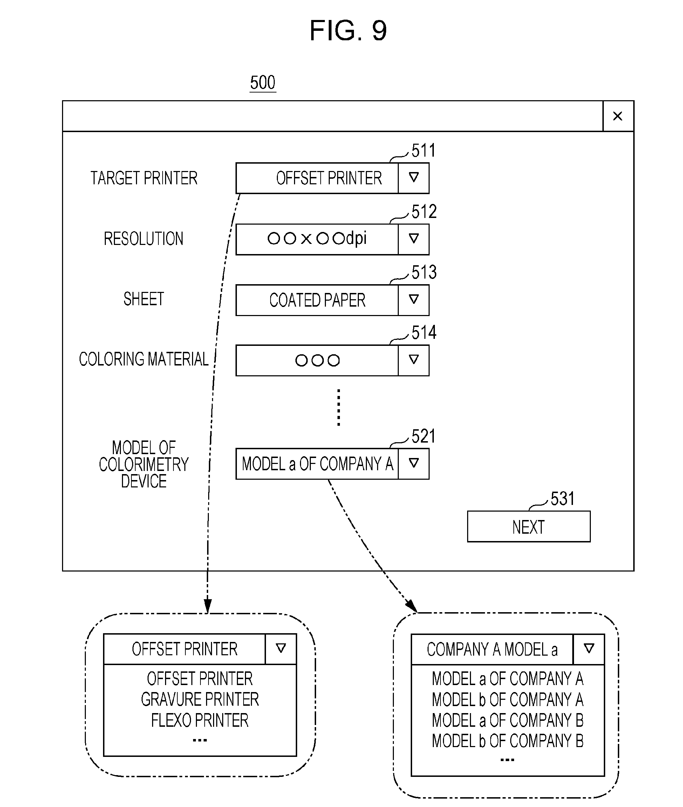

Fig. 9 shows an example of a setting screen 500 on which the host device H1 displays a display during the process of S102. The setting screen 500 is provided with a selection column 511 for the target printer (printing format), a selection column 512 for the resolution of the printed image 360, a type selection column 513 for the sheet (printing medium) of the printing target, a type selection column 514 for the first coloring material CL1 used in printed image formation, a model selection column 521 for the colorimetry device 801 used by the printing system SY2, a next button 531 or the like. In the target printer selection column 511, it is possible for the type (printing format) of printing device used to be selected and input from among a plurality of items such as an offset printer, a gravure printer, and a flexo printer. In the resolution selection column 512, it is possible for the resolution during printing to be selected and input from among a plurality of items. In the sheet type selection column 513, it is possible for the type of printing material used to be selected and input from among a plurality of items, such as a coated paper and Kent paper. In the coloring material type selection column 514, it is possible for the type of first coloring material CL1 used to be selected and input from a plurality of items. The process for receiving the selection input of the items with the selection columns 511 to 514 is a process for selecting the print mode, and the process of S103 for acquiring the printing conditions DT1 used for generating the LUT 200 from the plurality of printing conditions DT1 able to be set with respect to the printed matter 350. In the colorimetry device model selection column 521, it is possible for the model of colorimetry device used to be selected from a plurality of items, such as model a of Company A, model b of Company A, model a of Company B, and model b of Company B, and input. The process for receiving the selection input of the item with the model selection column 521 is the process in S104 for acquiring the usage model information DT2 that indicates the usage model used for generating the LUT 200 from a plurality of models included in the first colorimetry apparatus.

When the next button 531 is selected and operated, the host device H1 records indicating the printing conditions DT1 selected with the selection columns 511 to 514 and the usage model information DT2 the usage model selected with the model selection column 521. The host device H1 outputs the printing conditions DT1 and the usage model information DT2 to the image generation system SY3 (S106). The host device H2 of the image generation system SY3 acquires the printing conditions DT1 and the usage model information DT2, and stores the information in a memory, such as the RAM 12 (S200). In the processes in S106 and S200, for example, the host device H1 transmits the printing conditions DT1 and the usage model information DT2 to the host device H2 destination via the communication network NT1, and the host device H2 receives the printing conditions DT1 and the usage model information DT2. The host device H1 may record the printing conditions DT1 and the usage model information DT2 on a computer readable medium and the host device H2 may acquire the printing conditions DT1 and the usage model information DT2 from the recording medium.

Thereafter, the host device H1 of the printing system SY2 determines whether or not to measure the color of the color chart 361 with the combination of the acquired printing conditions DT1 and the usage model represented by the acquired usage model information DT2 (S108). In a case in which the printed matter 351 of the color chart 361 is already formed in the combination, and the color has already been measured with the colorimetry device 801, the host device H1 finishes the first colorimetry result acquisition process. In a case where measuring the color of the color chart 361 is required, the host device H1 acquires the chart data DC1 for forming the printed matter 351 of the color chart 361 (S110). The chart data DC1 may be data for each patch 362 corresponding to the usage amounts Dc, Dm, Dy, and Dk of the first coloring material CL1, and, for example, it is possible for the number that identifies each patch 362 to be i (i is an integer from 1 to N2), and represented by the CMYK coloring material usage amount Dci, Dmi, Dyi, and Dki in each patch 362. The chart data DC1 is data according to the printing conditions DT1. Next, the host device H1 prints the color chart 361 on the recording material M1 according to the chart data DC1 (S112). The obtained color chart 361 of the printed matter 351, has color patches 362 corresponding to N2 second lattice points G2 with a density DE1 of the first region R1 including the specified color in the input color space higher than the density DE2 of the second region R2 as shown in Fig. 3.

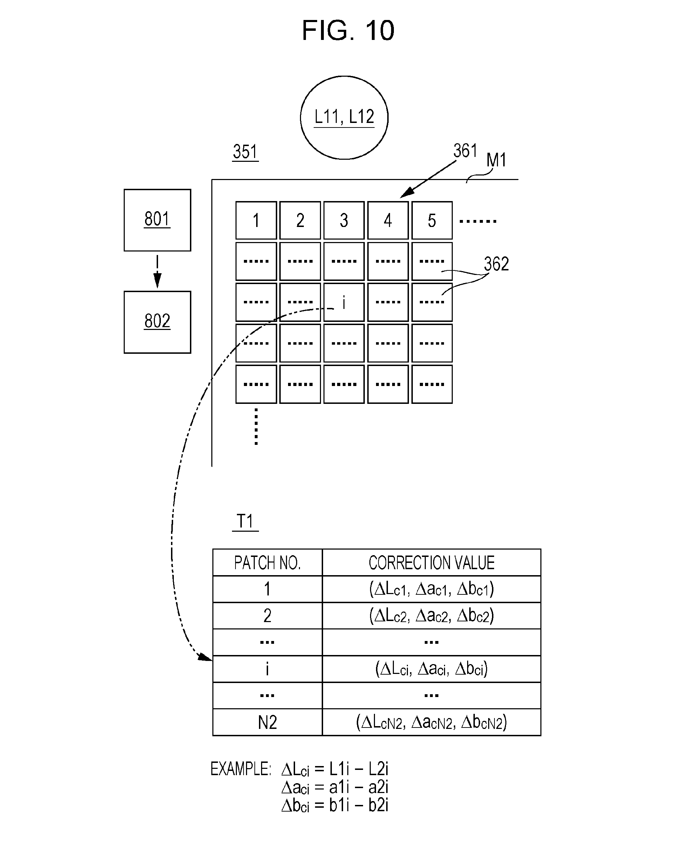

Fig. 10 schematically shows the condition of measuring the color of each patch 362 of the obtained color chart 361 of the printed matter 351 with the standard colorimetry device 801. The observation light source L11, for example, is a light source provided in the colorimetry apparatus 801. The number that identifies each patch 362 is i, and the colorimetry device 801 measures the color of each patch 362 and outputs the first colorimetry results (color value L1i, a1i, b1i). When the colorimetry results of each patch are shown, the patch identification number i may be applied, and the colorimetry results to which the number i is given are collectively referred to as the colorimetry results of each patch. The host device H1 acquires the color value L1i, a1i, b1i from the colorimetry device 801, and stores the value in the storage unit such as an HDD (S114). The host device H1 outputs the color value L1i, a1i, b1i to the image generation system SY3 (S116), and the first colorimetry result acquisition process is finished. The host device H2 of the image generation system SY3 acquires the color value L1i, a1i, b1i, and stores the value in the memory such as a RAM 12 (S200). In the processes in S116 and S200, for example, the host device H1 transmits the color value L1i, a1i, b1i to the host device H2 destination via the communication network NT1, and the host device H2 receives the color value L1i, a1i, b1i. The host device H1 may record the color value L1i, a1i, b1i on a computer readable medium and the host device H2 may acquire the color value L1i, a1i, b1i from the recording medium.

The printed matter 351 of the color chart 361 is passed to the image generation system SY3, as shown in Fig. 2.

The host device H2 of the image generation system SY3 first acquires the printing conditions DT1, the usage model information DT2, and the first colorimetry results (color value L1i, a1i, b1i) (S200 in Fig. 7).

Fig. 10 also schematically shows the condition of measuring the color of each patch 362 of the color chart 361 of the printed matter 351 formed by the printing device 300 with the colorimetry device 802 of the image generation system SY3. The observation light source L12, for example, is a light source provided in the colorimetry apparatus 802. The colorimetry device 802 measures the color of each patch 362 and outputs the second colorimetry results (color value L2i, a2i, b2i). The host device H2 acquires the color value L2i, a2i, b2i from the colorimetry device 802, and stores the value in a memory such as the RAM 12 (S202). Next, the process is understood according to whether or not the colorimetry value correction table T1 according to the combination of the acquired printing conditions DT1 and the usage model represented by the acquired usage model information DT2 is already present in the database DB1 (S204).

In a case in which there is no colorimetry value correction table T1, as shown in Fig. 10, the colorimetry value correction table T1 that corrects the difference between the color values L1i, a1i, b1i in which the color of each patch 362 of the color chart printed matter 351 formed by the printing device 300 is measured with the standard colorimetry device 801 and the color values L2i, a2i, b2i in which the color of each patch 362 of the same color chart printed matter 351 is measured with the colorimetry device 802 is generated (S206). When the L* component, a* component and b* component of the L*a*b* color space are represented by $\Delta L_{ci}$, $\Delta a_{ci}$, and $\Delta b_{ci}$, respectively, it is possible for the correction value of each patch (i) stored in the colorimetry value correction table T1 to be:

$$\Delta L_{ci} = L1i - L2i$$

$$\Delta a_{ci} = a1i - a2i$$

$$\Delta b_{ci} = b1i - b2i.$$

Next, the colorimetry value correction table T1 in which the colorimetry values $\Delta L_{ci}$, $\Delta a_{ci}$, and $\Delta b_{ci}$ are stored is associated with the combination of the printing conditions DT1 acquired in S200 and the usage model information DT2, and added to the database DB1 (S208), and the process proceeds to S212 in Fig. 8.

As above, the colorimetry value correction table T1 is generated according to the printing conditions DT1 and the model that configures the combination for each combination of printing conditions DT1 and model of standard colorimetry device.

Because the correction value may be able to correct the difference in the color value L1, a1, b1 and the color value L2, a2, b2, there is no limitation to (L1-L2, a1-a2, b1-b2), and may be (L2-L1, a2-a1, b2-a1) or the like. The correction data recorded in the database DB1 may be data or the like in which the color value L1i, a1i, b1i and the color value L2i, a2i, b2i are associated without obtaining the difference.

In a case in which the colorimetry value correction table T1 is included in the database DB1, the colorimetry value correction table T1 corresponding to the combination of the printing conditions DT1 acquired in S200 and the usage model information DT2 is acquired from the database DB1 (S210), and the process proceeds to S212 in Fig. 8. In this case, S202 can be omitted.

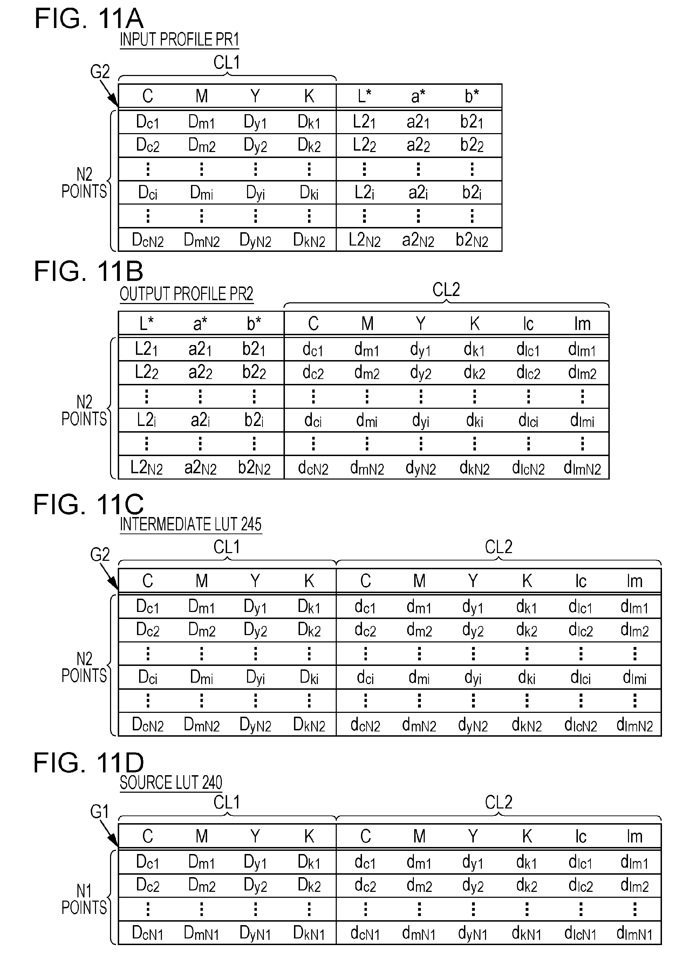

When the colorimetry value correction table T1 is generated or acquired, a process for associating the usage amounts Dc, Dm, Dy, Dk of the first coloring material CL1 and the target color value based on the second colorimetry results (L2, a2, b2) is performed (S212 in Fig. 8). The target color value may be the color value L2i, a2i, b2i itself, or may be a color value in which L2i, a2i, b2i are amended. The input profile PR1 in which the usage amounts Dci, Dmi, Dyi, Dki of the coloring material CL1 and the target color values L2i, a2i, b2i are associated for N2 second lattice points G2 is shown in Fig. 11A.

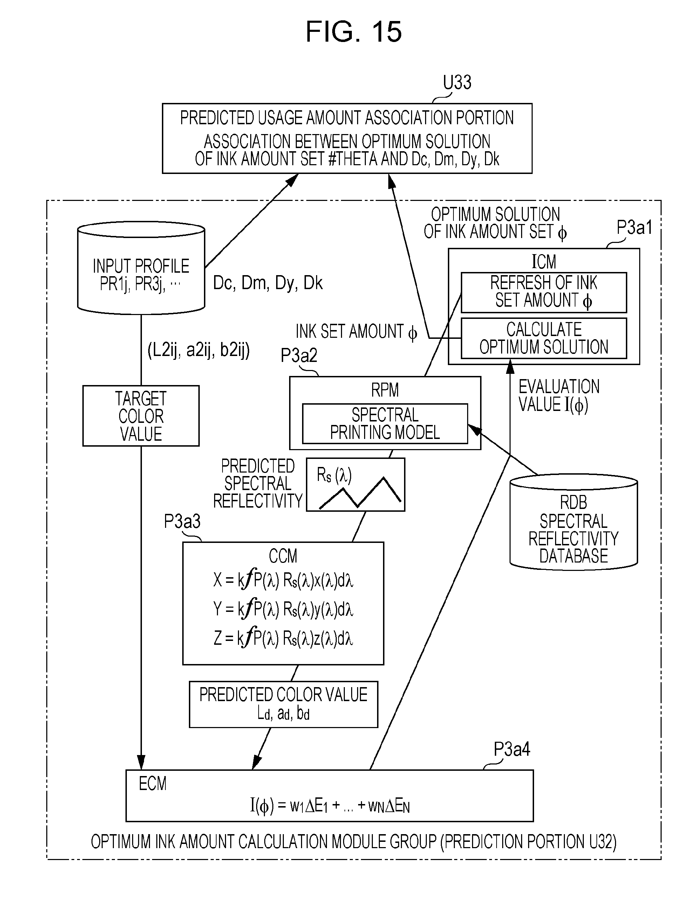

Because the current proof device 100 uses more colors of coloring material CL2 than the CMYK coloring material CL1 used by the printing device 300, it is possible to switch the target of the metameric matching by reflecting the intentions of the user upon ascertaining the characteristics of the printed image formed by the CMYK coloring material, and establish the image quality. The color of the color chart 361 may be measured by switching the observation light sources (j) using the same printed matter 351, and the target color value (L2ij, a2ij, b2ij) may be set based on the colorimetry results. For example, in a case in which the source LUT 240 in which the tones of the CMYK color space printed image 360 and the CMYKlclm color space color reproduction image 160 are combined as much as possible is generated under the D50, D55, D65, A, and F11 light sources and numerous observation light sources, the color of the color chart 361 may be measured by sequentially switching between the D50, D55, D65, A, and F11 light sources (including artificial light sources. The same applies below). Moreover, an input profile PR1j (refer to Fig. 15) in which the usage amounts Dc, Dm, Dy, Dk of the first coloring material and the target color values L2ij, a2ij, b2ij are associated may be created for each of the D50, D55, D65, A, and F11 light sources.

After the process in S212, a process for predicting the usage amounts $d_{ci}$, $d_{mi}$, $d_{yi}$, $d_{ki}$, $d_{lci}$, $d_{lmi}$ of the second coloring material CL2 is performed so that the color value measured by the colorimetry device 802 of the second coloring material CL2 formed in the color reproduction image 160 approaches the target color values L2i, a2i, b2i (S214). Details of the prediction process are described later. The output profile PR2 in which the target color values L2i, a2i, b2i and the predicted usage amounts $d_{ci}$, $d_{mi}$, $d_{yi}$, $d_{lci}$, $d_{lmi}$ are associated for N2 second lattice points G2 is shown in Fig. 11B. In the case of a correspondence relationship between the color value not matching the target color value and the usage amount of the coloring material CL2, the usage amounts $d_{ci}$, $d_{mi}$, $d_{yi}$, $d_{ki}$, $d_{lci}$, $d_{lmi}$ of the coloring material CL2 corresponding to the target color values L2i, a2i, b2i may be calculated by an interpolation operation and the output profile PR2 generated.

In a case of setting the target color values L2ij, a2ij, b2ij for the plurality of observation light sources j, the output profile in which the target color value and the predicted usage amount are associated may be generated.

After the process of S214, a process for associating the usage amounts Dci, Dmi, Dyi, Dki of the first coloring material CL1 and the predicted usage amounts $d_{ci}$, $d_{mi}$, $d_{yi}$, $d_{ki}$, $d_{lci}$, $d_{lmi}$ of the second coloring material CL2, thereby generating the source LUT 240 is performed (S216). Because the lattice points G1 of the source LUT 240 are N1 more than N2, for example, an intermediate LUT 245 having N2 second lattice points G2 as shown in Fig. 11C is generated, and thereafter, the source LUT 240 having N1 first lattice points G1 as shown in Fig. 11D is generated. When the coloring material usage amounts Dci, Dmi, Dyi, Dki corresponding to the target color values L2i, a2i, b2i in the input profile PR1 shown in Fig. 11A and the coloring material usage amounts $d_{ci}$, $d_{mi}$, $d_{yi}$, $d_{ki}$, $d_{lci}$, $d_{lmi}$ corresponding to the target color values L2i, a2i, b2i (or L2ij, a2ij, b2ij) in the output profile PR2 shown in Fig. 11B are associated, the intermediate LUT 245 shown in Fig. 11C is generated. In order for the source LUT 240 to be generated from the intermediate LUT 245, for example, the output usage amounts $d_c$, $d_m$, dy, $d_k$, $d_{lc}$, $d_{lm}$ of the first lattice points G1 that are not the second lattice points G2 may be calculated by an interpolation operation from the output usage amounts of the plurality of second lattice points G2. In a case in which the input color space is a four-dimensional CMYK color space, for example, it is possible for the output usage amount of the first lattice point G1 to be obtained by a known interpolation method such as tetrahedral interpolation or hexahedral interpolation in the CMY color space for K usage amounts.

When generating the source LUT 240, not only the color reproduction precision, but also the image quality element, such as the graininess or gradation properties of the color reproduction image 160 may be considered. Adjusting the graininess and gradation properties of the color reproduction image 160 during source LUT generation is described later.

The coloring material usage amounts $d_c$, $d_m$, dy, $d_k$, $d_{lc}$, $d_{lm}$ stipulated in the boundary part Rb (refer to Fig. 2) between the first region R1 and the second region R2 in the input color space may be smoothed, as necessary. For example, it is possible for the coloring material usage amounts $d_c$, $d_m$, dy, $d_k$, $d_{lc}$, $d_{lm}$ stipulated in the boundary parts Rb to be smoothed when the usage amount is amended such that the output usage amount in the lattice points in the first region R1 and the output usage amount in the lattice points in the second region R2 are smoothly linked for each of the output usage amounts $d_c$, $d_m$, dy, $d_k$, $d_{lc}$, $d_{lm}$ of the input color space CMYKlclm.

The method for generating an LUT of the technology has a testing step for verifying the color precision of the obtained color reproduction image 160 by color conversion in which the source LUT 240 is referenced by using the colorimetry value correction table T1 (S218 to S230). After the process in S216, a process for acquiring the chart data DC1 for forming the printed matter 351 of the color chart 361 for forming the printed matter 151 of the second color chart 161 with the proof device 100 is performed (S218). The chart data DC1 is data corresponding to the usage amounts Dci, Dmi, Dyi, Dki of the first coloring material CL1 used by the printing device 300, and is made data according to the printing conditions DT1. After the process in S218, a process for forming the second color chart 161 as the color reproduction image 160 on the printing medium M2 by converting the chart data DC1 according to the source LUT 240 is performed (S220). The second color chart 161 in which a plurality of patches 162 is lined up two-dimensionally on the obtained printed matter 151 is formed as shown in Fig. 2. The total number of patches 162 is the same as the number N2 of second lattice points G2.

After the process in S220, the process for acquiring the third colorimetry results (color value L3, a3, b3) by measuring the color of the second color chart 161 with the colorimetry device 802 (S222). The observation light source L12, for example, is a light source provided in the colorimetry apparatus 802. The colorimetry device 802 measures the color of each patch 162 and outputs the color value L3i, a3i, b3i. The host device H2 acquires the color value L3i, a3i, b3i from the colorimetry device 802, and stores the value in a memory such as the RAM 12.

The color value L3, a3, b3 is a value obtained from the colorimetry device 802 of the image generation system SY3, and may be different to the value obtained from the standard colorimetry device 801 of the printing system SY2. A process for converting the color value L3, a3, b3 based on the colorimetry value correction table T1 to fourth colorimetry results (converted color value L4, a4, b4) by the standard colorimetry device 801 is performed (S224). When the correction values of the colorimetry value correction table T1 are $\Delta L_{ci}$, $\Delta a_{ci}$, $\Delta b_{ci}$, it is possible for the converted color value L4i, a4i, b4i to be, for example:

$$L4i = L3i + \Delta L_{ci}$$

$$a4i = a3i + \Delta a_{ci}$$

$$b4i = b3i + \Delta b_{ci}.$$

If $\Delta L_{ci}$ = L1i - L2i, $\Delta a_{ci}$ = a1i - a2i, and $\Delta b_{ci}$ = b1i - b2i,

$$L4i = L3i + L1i - L2i$$

$$a4i = a3i + a1i - a2i$$

$$b4i = b3i + b1i - b2i.$$

Naturally, the conversion process, in addition to the conversion formula, may be a conversion process using polynomial interpolation, a conversion process referencing a lookup table, a conversion process using a neural network, or the like.

After the process in S224, a process for calculating the color precision of the converted color value L4i, a4i, b4i with respect to the color value L1i, a1i, b1i by the standard colorimetry device 801 is performed (S226). The color precision is able to be expressed by the color difference $\Delta Ei = \{(L4i-L1i)^2 + (a4i - a1i)^2 + (b4i - b1i)^2\}^{1/2}$ of each patch (i) may be calculated based on the CIE DE 2000 color difference formula ($\Delta E_{2000}$). The color precision represents the difference between the converted colorimetry results (L4, a4, b4) and the first colorimetry results (L1, a1, b1).

After the process in S226, the host device H2 determines whether or not the obtained color precision is within the required standard, and displays the determination results on a display 40 (S228). It is possible for determination of whether or not the color precision is within the standard to be performed by determining whether or not the color difference $\Delta Ei$ is below a threshold TEi (for example, 1.0) or less. The display of the determination results may be for each patch (i), or may be a display of whether or not the color precision is within the standard for all of the patches (i). The process according to whether or not the determination results are within the standard is understood (S230).

In a case in which the difference (color precision) between the converted color value L4i, a4i, b4i and the standard color value L1i, a1i, b1i is not within the standard, a process for amending the target color value from (L2i, a2i, b2i) to (L5i, a5i, b5i) so that the color precision is within the standard (for example, $\Delta Ei \le TEi$ for all patches (i)) in a case in which there is a patch (i) that is $\Delta Ei > TEi$ is performed (S232), and thereafter the processes in S214 to S230 are performed. Since the converted color value L4i, a4i, b4i and the standard color value L1i, a1i, bi1 are known in advance, it is possible to amend the source target color values L2i, a2i, b2i, by making

$$L5i = L2i + L1i - L4i$$

$$a5i = a2i + a1i - a4i$$

$$b5i = b2i + b1i - b4i$$

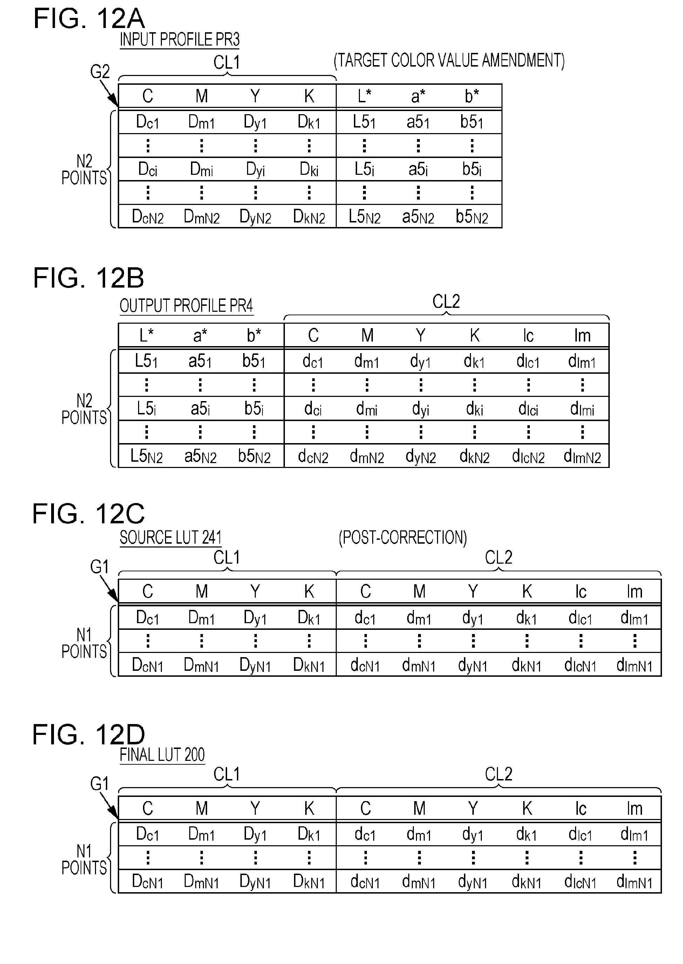

the objective. In a case in which the brightness of the converted color value L4i is not within the standard and is lower (darker) than the brightness L1i of the standard color value L1i, the brightness of the target color value is amended so as to be higher (brighter). The input profile PR3 in which the usage amounts Dci, Dmi, Dyi, Dki of the coloring material CL1 and the post-amendment target color values L5i, a5i, b5i are associated for N2 second lattice points G2 is shown in Fig. 12A.

After the process in S232, firstly, a process for predicting the usage amounts $d_{ci}$, $d_{mi}$, $d_{yi}$, $d_{ki}$, $d_{lci}$, $d_{lmi}$ of the second coloring material CL2 so as to approach the post-amendment target color values L5i, a5i, b5i is performed (S214). The output profile PR4 in which the post-amendment target color values L5i, a5i, b5i and the predicted usage amounts $d_{ci}$, $d_{mi}$, $d_{yi}$, $d_{lci}$, $d_{lmi}$ are associated for N2 second lattice points G2 is shown in Fig. 12B. In S216, the intermediate LUT 245 is corrected by associating the usage amounts Dci, Dmi, Dyi, Dki of the first coloring material CL1 and the predicted usage amounts $d_{ci}$, $d_{mi}$, $d_{yi}$, $d_{ki}$, $d_{lci}$, $d_{lmi}$ of the second coloring material CL2, thereby generating the source LUT 240. Fig. 12C shows the post-correction source LUT 241 in which the usage amounts Dci, Dmi, Dyi, Dki of the coloring material CL1 and the newly predicted usage amounts $d_{ci}$, $d_{mi}$, $d_{yi}$, $d_{ki}$, $d_{lci}$, $d_{lmi}$ of the second coloring material CL2 are associated for the N1 first lattice points G1. In S218 to S228 thereafter, the determination results of whether or not the color precision is within the standard are displayed, and the process according to whether or not the determination results in S230 are within the standard is understood.

In a case in which the determination results are within the standard, for example, $\Delta Ei \le TEi$ for all patches (i), the source LUT 241 is the final LUT 200, and the LUT generation process finishes. Fig. 12D shows a final LUT 200 that is the same as the post-correction source LUT 241. When the LUT 200 is stored in the storage unit U11 of the proof device 100, the proof device 100 converts the input data corresponding to the usage amounts Dc, Dm, Dy, Dk of the first coloring material CL1 to data of the usage amounts $d_c$, $d_m$, dy, $d_k$, $d_{lc}$, $d_{lm}$ of the second coloring material CL2 according to the LUT 200, and it is possible to form the proof 150 in which the color reproduction image 160 is printed on the printing medium M2.

As above, it is possible to generate the final LUT 200 by correcting the source LUT 240 such that the correspondence relationship between the usage amounts Dc, Dm, Dy, Dk of the coloring material CL1 and the usage amounts $d_c$, $d_m$, dy, $d_k$, $d_{lc}$, $d_{lm}$ of the coloring material CL2 stipulated in the source LUT 240 approaches the correspondence relationship based on the colorimetry results according to the usage model of the standard colorimetry device 801 by referencing the colorimetry value correction table T1 according to the combination of the acquired printing conditions DT1 and the usage model represented by the acquired usage model information DT2. When color conversion is performed referencing the LUT 200, the difference in the colorimetry results is corrected according to the difference in the colorimetry devices. Therefore, it is unnecessary to perform a dedicated conversion process that corrects the differences in colorimetry results according to differences in the colorimetry devices, and errors due to the dedicated conversion process do not arise. Accordingly, the technology is able to improve color precision in case of using the LUT 200 in which the correspondence relationship between the usage amount of the coloring material of the printing device 300 and the usage amount of the coloring material of the proof device 100 is stored.

Since the coloring material CL1 of the final target material of the printing proof is used in the color chart 361 for creating the colorimetry value correction table T1, the technology is able to realize highly precise colorimetry value correction specialized to use in printing.

If the colorimetry value correction table T1 created based on the combination of the printing conditions and the usage model of the colorimetry device performed in the past is already registered in the database DB1, it is unnecessary to again create the colorimetry value correction table T1. Therefore, a reduction in the workload in LUT creation is achieved.

6. Characteristics of Small Lattice Point Lookup Table Included in Source Lookup Table

Below, additional characteristics of the technology are sequentially described.

The small lattice point LUT 210 shown in Fig. 3 is a virtual LUT in which the correspondence relationship between the input usage amount and the output usage amount for a smaller number of selection lattice points G5 than the N1 first lattice points G1 of the source LUT 240 is stipulated. The selection lattice points G5 are second lattice points G2 arranged at a lower density than the specified color reference lattice points G3 and G4 with respect to the comprehensive region R9, and patches 362 of the corresponding colors are included in the color chart 361. The characteristics of the small lattice point LUT 210 are described later.

As described above, the CMYK color space is four-dimensional, in a case of providing Ng steps of lattice points for each of the usage amounts of CMYK, the number of lattice points of the source LUT 240 is $N1 = Ng^4$, and if Ng = 17, then N1 = 83521. The lattice points G5 of the small lattice point LUT 210 may be N3 fewer than the N1 number of lattice points of the source LUT 240.

The N3 number of lattice points G5 of the small lattice point LUT 210 is also thought to be set to $Ns^4$ as the Ns steps (Ns is an integer that satisfies $2 \le Ns < Ng$) for each of the CMYK coloring material usage amounts. Although this concept is included in the technology, since the gamut of the three-dimensional color space formed by the remaining three colors by fixing the coloring material usage amount of any one color (made the selected color) of CMYK changes according to the coloring material usage amount of the selected color, $N3 < Ns^4$ may be set. The gamut is the size or the volume of the color reproduction region, and for example, is represented by size or volume in the L*a*b* color space. For example, the K coloring material CL3 is a coloring material that brings about the effect of lowering the brightness and saturation, the CMYK color of (C,M,Y,K) = (50%, 30%, 10%, 100%) is reproduced to be dark and with a low saturation with respect to the CMY color of (C,M,Y,K) = (50%, 30%, 10%, 0%). In light of this, the gamut of the CMYK color space in which the K coloring material usage amount is fixed to one given limited value (for example, K = 10%) becomes smaller than the gamut of the CMY color space in with K is not used at all. By adding a fixed amount of the K coloring material, it can be said that the gamut becomes smaller than when not added.

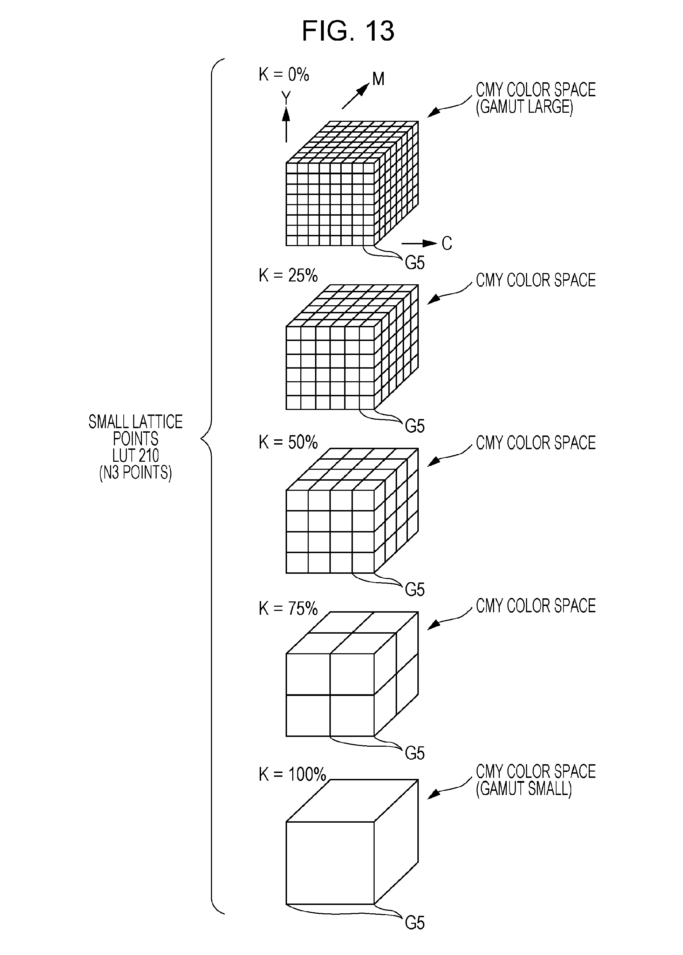

In light of the above, it is not necessary to have numerous lattice points with respect to the CMY color space with a large K coloring material usage amount and only a small gamut. Conversely, it is necessary to have numerous lattice points for accurately denoting the color in the color space with non-contiguous lattice points with respect to the CMY color space with a small K coloring material usage amount and a large gamut. As in the example in Fig. 13, for each of the usage amounts of the K coloring material CL3 corresponding to the lattice points G1 of the final LUT 200, that is, each position on the K axis of the lattice points G1, the lattice points G5 of a number according to the usage amount of the K coloring material CL3 is provided in the CMY color space represented by the CMY coloring material CL4. Specifically, since the gamut is large when the K coloring material usage amount is small, the number of lattice points in the CMY color space becomes large, and since the gamut is small when the K coloring material usage amount is large, the number of lattice points in the CMY color space becomes small.

Fig. 13 schematically shows an arrangement example of selection lattice points G5 for each usage amount of the K coloring material CL3. When the K coloring material usage amount of the lattice points G1 of the final LUT 200 is Ng steps, the CMY three-dimensional color space becomes Ng. In the example in Fig. 13, in a case where the K coloring material usage amount is 0%, the gamut of the CMY color space has a comparatively wide range. In a case where the K coloring material usage amount is 25%, the gamut of the CMY color space has narrower range than the case where K = 0%. The number of selection lattice points G5 corresponding to K = 0% (example of first usage amount) is greater than the number of selection lattice points G5 corresponding to K = 25% (example of second usage amount). In a case where the K coloring material usage amount is 50%, the gamut of the CMY color space has narrower range than the case where K = 25%. Accordingly, the number of selection lattice points G5 corresponding to K = 0% and K = 25% (example of first usage amount) is greater than the number of selection lattice points G5 corresponding to K = 50% (example of second usage amount). The gamut of the CMY color space further narrows in the order of the K coloring material usage amounts of 75% and 100%. Accordingly, the larger the K coloring material usage amount becomes, the more the number of selection lattice points G5 of the CMY color space is reduced. The minimum limit $2^3 = 8$ lattice points G5 is provided in the CMY color space for the interpolation operation.

Because the first and second usage amounts in K are relative, for example, the first usage amount may be K = 75%, and the second usage amount may be K = 100%. Naturally, the lattice points G5 provided in each CMY color space may be uniformly arranged, or may be non-uniformly arranged.

When each position of the CMY lattice points G5 are decided for each K position of the final lattice points G1, the positions of the selection lattice points G5 that are the small lattice points LUT 210 are determined as in the example in Fig. 3.

As described above, in case in which the K coloring material usage amount is the comparatively small first usage amount, the gamut of the CMY color space widens. Meanwhile, in case in which the K coloring material usage amount is the comparatively large second usage amount, the gamut of the CMY color space narrows. Since number of selection lattice points G5 corresponding to the first usage amount of the K coloring material is greater than the number of selection lattice points G5 corresponding to the second usage amount of the K coloring material, it is possible for the technology to reduce the total number of selection lattice points G5 provided in the input color space to within an appropriate range. Accordingly, it is possible for the technology to further simplify the generation of an LUT.

7. Example of Predicting Usage Amount of Second Coloring Material

The LUT generating device U0 is able to calculate target color values for the number of light sources determined at the same time as the ink amount for reproducing with an optimum amount search method (optimization algorithm) for the ink amount. The prediction unit U32 predicts the usage amount of the CMYKlclm coloring material CL2 such that the color value of the CMYKlclm coloring material CL2 formed in the color reproduction image 160 approaches the target color values L2ij, a2ij, b2ij for each observation light source, based on the evaluation value I of the proximity to the target color values L2ij, a2ij, b2ij stipulated in the input profile for each light source of a plurality of observation light sources L0.

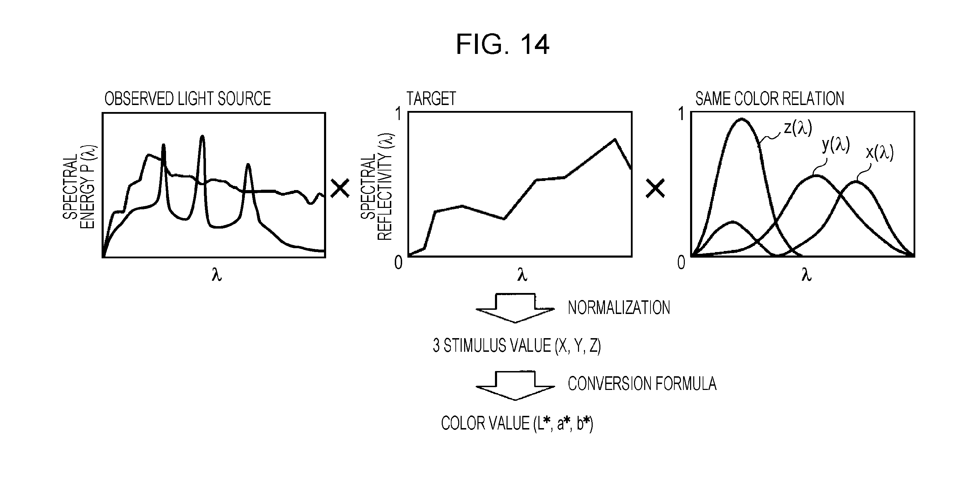

Fig. 14 describes a condition in which color values are obtained under each of the plurality of observation light sources from a target (patch) having a given spectral reflectivity. The target spectral reflectivity $R_t(\lambda)$ ordinarily has a

distribution that is not even over the entire visible wavelength region. Each light source has a different spectral energy $P(\lambda)$ distribution. The spectral energy of the reflected light of each wavelength when the light source irradiates a target is a value in which the target spectral reflectivity $R_t(\lambda)$ and the spectral energy $P(\lambda)$ are multiplied for each wavelength. The color-matching functions $x(\lambda)$, $y(\lambda)$, $z(\lambda)$ according to human spectral sensitivity characteristics with respect to the spectrum of spectral energy of reflection light are each convolution integrated, and it is possible to obtain a tristimulus value X, Y, Z by normalizing with the coefficient k.

$$X = k \int P(\lambda) R_t(\lambda) x(\lambda) d\lambda$$

$$Y = k \int P(\lambda) R_t(\lambda) y(\lambda) d\lambda \qquad \cdots (1)$$

$$Z = k \int P(\lambda) R_t(\lambda) z(\lambda) d\lambda$$

It is possible for color value L*a*b* to be obtained by converting the tristimulus value with a predetermined conversion formula.

As shown in Fig. 14, since the spectrum of the spectral energy $P(\lambda)$ is different for each light source, the target color value finally obtained also differs according to the light source.

Fig. 15 schematically shows an example of the flow of a process of an optimum ink amount calculation module group that calculates an ink amount set $\phi$ that is able to reproduce the same color as the target color values L2ij, a2ij, b2ij. In a case where the second coloring material CL2 is the CMYKlclm coloring material, the ink amount set $\phi$ signifies the combination of the usage amounts $d_c$, $d_m$, dy, $d_k$, $d_{lc}$, $d_{lm}$ of CMYKlclm ink discharged.

The optimum ink amount calculation module group (prediction unit U32) includes an ink amount set calculation module (ICM) P3a1, a spectral reflectivity prediction module (RPM) P3a2, a color calculation module (CCM) P3a3, and an evaluation value calculation module (ECM) P3a4.

The ink amount set calculation module (ICM) P3a1 selects one lattice point G1 from the four dimensional printing color profile PR1j for which the input is the CMYK coloring material usage amount, and acquires the target color values L2ij, a2ij, b2ij associated with the lattice point G1. This point differs significantly from the printing system disclosed in JP-A-2009-200820 in which the input is RGB image output.

The spectral reflectivity prediction module (RPM) P3a2 predicts the spectral reflectivity $R(\lambda)$ as the predicted spectral reflectivity $R_s(\lambda)$ when the proof device 100 discharges ink to the printing medium M2, such as a printing sheet, based on the ink amount set $\phi$ according to the ink amount set $\phi$ form the ICMP3a1, specifically the input of the ink usage amounts $d_c$, $d_m$, dy, $d_k$, $d_{lc}$, $d_{lm}$. Because it is possible to predict the formation state of each ink dot on the printing medium M2 if the ink amount set $\phi$ is designated, it is possible for the RPM P3a2 to uniquely predict the predicted spectral reflectivity $R_s(\lambda)$.

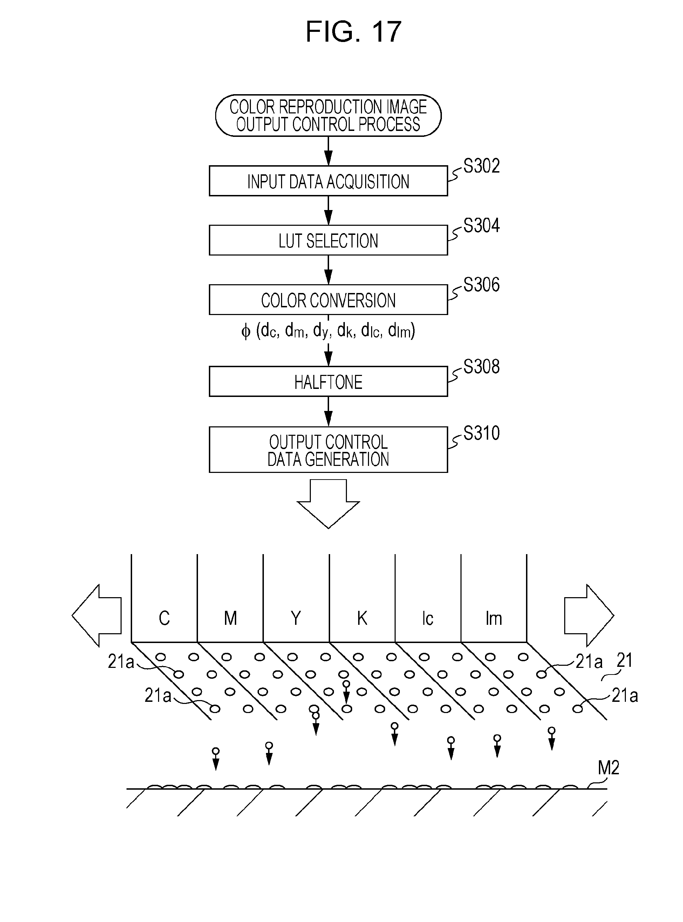

Here, the prediction model (spectral printing model) used in RPM P3a2 is described with respect to Figs. 17 to 20C. Fig. 17 schematically shows an example of a recording head 21 of the proof device 100. The recording head 21 includes a plurality of nozzles 21a for each CMYKlclm ink. The proof device 100 performs control that sets the usage amounts for each CMYKlclm ink to the ink amount set $\phi$ ($d_c$, $d_m$, dy, $d_k$, $d_{lc}$, $d_{lm}$). The ink droplets discharged from each nozzle 21a become a collection of numerous dots on the printing medium M2, and thereby, a color reproduction image 160 is formed on the printing medium M2 with an ink area coverage according to the ink amount set $\phi$ ($d_c$, $d_m$, dy, $d_k$, $d_{lc}$, $d_{lm}$).

The prediction model (spectral printing model) used in the RPM P3a2 predicts the spectral reflectivity $R(\lambda)$ as the predicted spectral reflectivity $R_s(\lambda)$ is a case of printing being performed with an arbitrary ink amount set $\phi$ ($d_c$, $d_m$, dy, $d_k$, $d_{lc}$, $d_{lm}$). In the spectral printing model, the color patch is printed for a plurality of representative points in the ink amount space, and a spectral reflectivity database RDB in which the spectral reflectivity $R(\lambda)$ is obtained by measuring with a spectroreflectometer. By performing prediction with a cellular Yule-Nielsen spectral Neugebauer model in which the spectral reflectivity database RDB is used, the predicted spectral reflectivity $R_s(\lambda)$ is accurately predicted in a case of performing printing with an arbitrary ink amount set $\phi$.

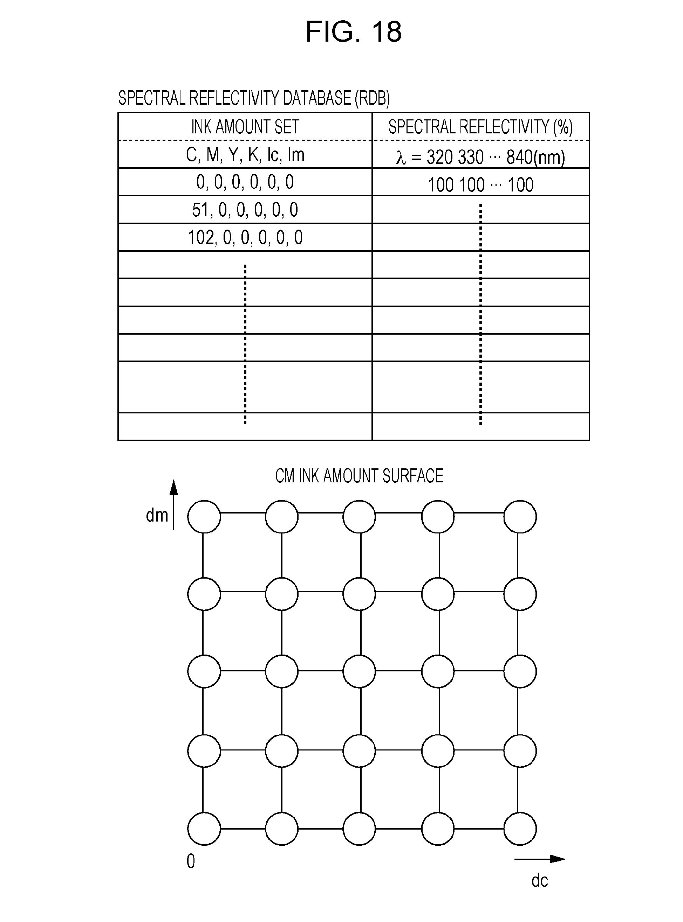

Fig. 18 schematically shows an example of the structure of the spectral reflectivity database RDB. Although the ink amount space in the embodiment is six-dimensional, only the CM plane is depicted in order to simplify the drawing. The spectral reflectivity database RDB is an LUT in which the spectral reflectivity $R(\lambda)$ obtained by printing and measuring in practice for the ink amount set ($d_c$, $d_m$, dy, $d_k$, $d_{lc}$, $d_{lm}$) of the plurality of lattice points in the ink amount space is recorded. The LUT includes lattice points divided into a plurality of respective ink amount axes. Only a portion of the lattice points is printed and measured in practice, and the spectral reflectivity $R(\lambda)$ for other lattice points may be predicted based on the spectral reflectivity $R(\lambda)$ of the lattice points that are printed and measured in practice. In so doing, it is possible for the number of color patches that are printed and measured in practice to be reduced.

The spectral reflectivity database RDB is prepared for each type of printing medium. The spectral reflectivity $R(\lambda)$ is determined by the spectral transmissivity and the reflectivity of the printing medium according to the ink film (dot) formed on the printing medium, and is strongly influenced by the surface properties (dependent on dot shape) and reflectivity of the printing medium.

The RPM P3a2 executes prediction with the cellular Yule-Nielsen spectral Neugebauer model in which the spectral reflectivity database RDB is used according to a request from the ICM P3a1. In the prediction, the prediction conditions are acquired from the ICM P3a1, and the prediction conditions are set. For example, the printing medium or the ink amount set $\phi$ are set as the printing conditions. In a case of performing prediction for a glossy paper as the printing sheet, the spectral reflectivity database RDB created by printing color patches on a glossy paper is set.

When the spectral reflectivity database RDB is able to be set, the ink amount set $\phi$ ($d_c$, $d_m$, dy, $d_{lc}$, $d_{lm}$) input from the ICM P3a1 is applied as the spectral printing model. The cellular Yule-Nielsen spectral Neugebauer model is based on the well-known spectral Neugebauer and the Yule-Nielsen models. Although a model of a case of using the three types of CMY ink is described for simplicity, it is possible to expand the same model to a model using the CMYKlclm ink set of the embodiment. For information on the cellular Yule-Nielsen spectral Neugebauer model, refer to Color Res Appl 25, 4 to 19, 2000, and R. Balasubramanian, Optimization of the spectral Neugebauer model for printer characterization, J. Electronic Imaging 8(2), 156 to 166 (1999).

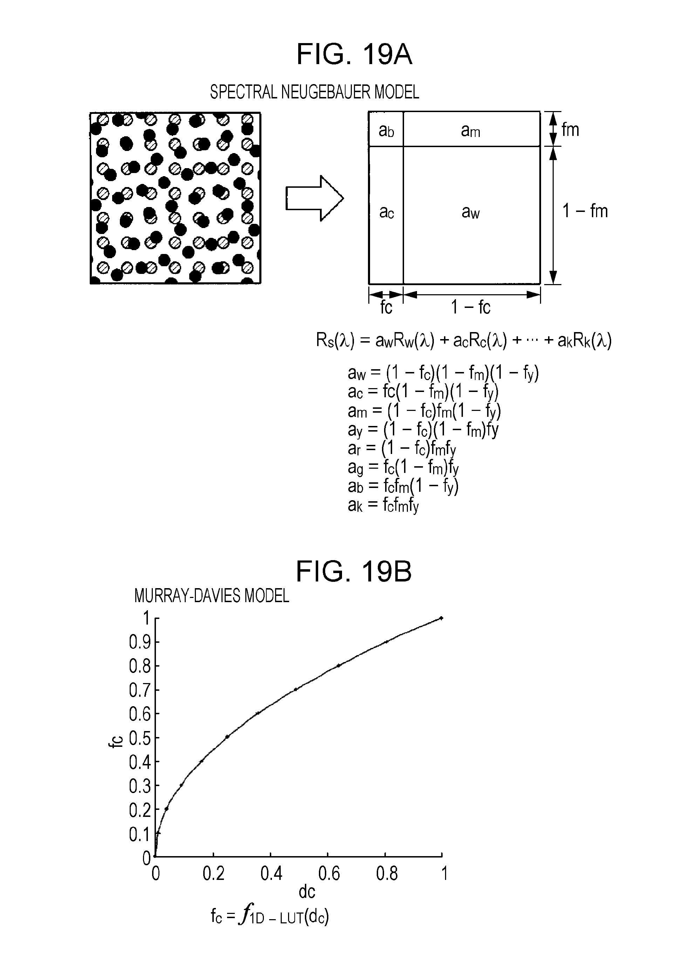

Figs. 19A and 19B schematically show an example of a spectral Neugebauer model. In the spectral Neugebauer model, the predicted spectral reflectivity $R_s(\lambda)$ of the printed matter when printed with an arbitrary ink amount set ($d_c$, $d_m$, dy) is provided with the following formula.

$$R_s(\lambda) = a_w R_w(\lambda) + a_c R_c(\lambda) + a_m R_m(\lambda) + a_y R_y(\lambda)$$
$$+ a_r R_r(\lambda) + a_g R_g(\lambda) + a_b R_b(\lambda) + a_k R_k(\lambda) \qquad \cdots (2)$$

$$a_w = (1-f_c)(1-f_m)(1-f_y)$$

$$a_c = f_c(1-f_m)(1-f_y)$$

$$a_m = (1-f_c)f_m(1-f_y)$$

$$a_y = (1-f_c)(1-f_m)f_y$$

$$a_r = (1-f_c)f_m f_y$$

$$a_g = f_c(1-f_m)f_y$$

$$a_b = f_c f_m (1-f_y)$$

$$a_k = f_c f_m f_y$$

Here, $a_i$ is the area ratio of the i-th region, and $R_i(\lambda)$ is the spectral reflectivity of the i-th region. The subscript i signifies each of the region (w) without ink, the region (c) with only cyan ink, the region (m) with only magenta, the region (y) with only yellow ink, the region (r) on which magenta and yellow inks are discharged, the region (g) on which yellow and cyan inks are discharged, the region (b) on which cyan and magenta inks are discharged, and the region (k) on which the three CMY inks are discharged. $f_c$, $f_m$, and fy are the proportions (referred to as "ink area coverage") of the area covered with the ink when only one type of each CMY ink is discharged.

The ink area coverages $f_c$, $f_m$, and fy are provided with the Murray-Davis model shown in Fig. 19B. In the Murray-Davis model, the ink area coverage $f_c$ of the cyan ink has a non-linear relationship with the cyan ink amount $d_c$, and it is possible for the ink amount $d_c$ to be converted to the ink area coverage $f_c$ with a one-dimensional lookup table. The reason that the ink area coverage $f_c$, $f_m$, fy has a non-linear relationship with the ink amounts $d_c$, $d_m$, dy is that, although the ink sufficiently spreads in a case in which a small amount of ink is discharged in a unit area, in a case in which a large amount of ink is discharged, the area covered by the ink does not increase much because the ink overlaps itself. The same applies to other types of MY ink.

When the Yule-Nielsen model is applied pertaining to the spectral reflectivity, the formula (2) is overwritten with the formulae (3a) and (3b) below.

$$R_s(\lambda)^{1/n} = a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n} \quad \cdots (3a)$$

$$R_s(\lambda) = \{ a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n} \}^n \quad \cdots (3b)$$

Here, n is a predetermined coefficient of 1 or more, and, for example, it is possible to set n=10. The formulae (3a) and (3b) are formulae that represent the Yule-Nielsen Spectral Neugebauer Model.

The cellular Yule-Nielsen spectral Neugebauer model adopted in the embodiment divides the ink amount space of the Yule-Nielsen spectral Neugebauer model described above into a plurality of cells.

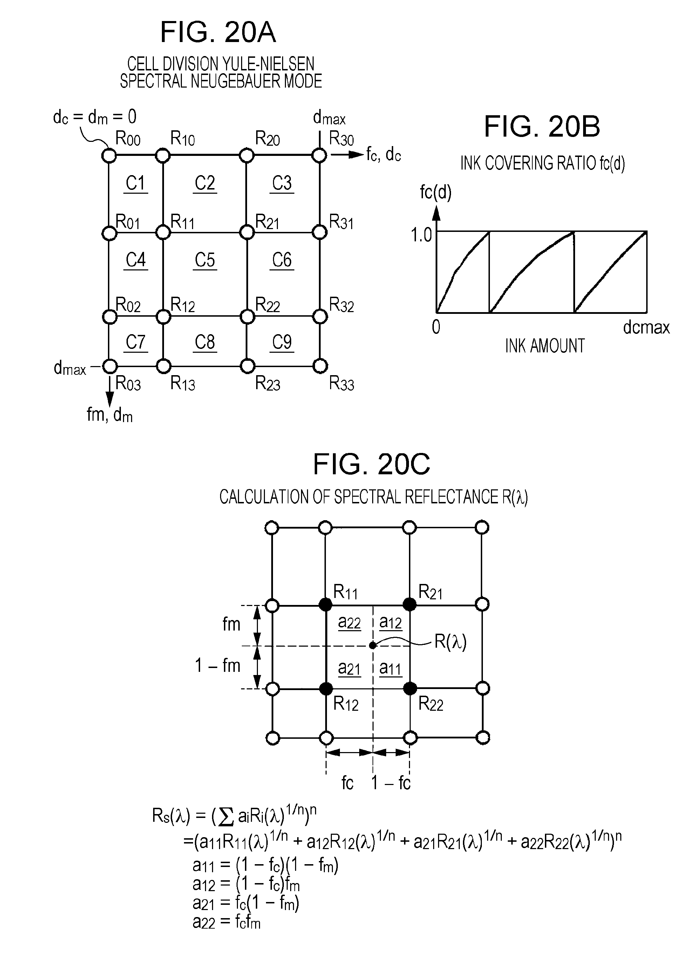

Fig. 20A shows an example of cell division in a cellular Yule-Nielsen spectral Neugebauer model. Here, for simplicity of the description, cell division of a two-dimensional ink amount color space including two axes of ink amounts $d_c$, $d_m$ of CM ink is depicted. The ink area coverage $f_c$, $f_m$ may be considered axes that show ink area coverage $f_c$, $f_m$ because of having a unique relationship with the ink amounts $d_c$, $d_m$ in the above-described Murray-Davis model. The white circles are grid points (referred to as "lattice points") of the cell division, and the two-dimensional ink amount (area coverage) space is divided into 9 cells C1 to C9. The ink amount set ($d_c$, $d_m$) corresponding to each lattice point is set to the ink amount set corresponding to the lattice point stipulated in the spectral reflectivity database RDB. That is, by referencing the above-described spectral reflectivity database RDB, it is possible to obtain the spectral reflectivity R($\lambda$) of each lattice point. Accordingly, it is possible to acquire the spectral reflectivity R($\lambda$)$_{00}$, R($\lambda$)$_{10}$, R($\lambda$)$_{20}$,..., R($\lambda$)$_{33}$ from the spectral reflectivity database RDB.

In the embodiment, cell division is performed with the six-dimensional ink amount space of CMYKlclm, and the coordinates of each lattice point are represented by the six-dimensional ink amount set $\phi$ ($d_c$, $d_m$, dy, $d_k$, $d_{lc}$, $d_{lm}$). The spectral reflectivity R($\lambda$) of the lattice point corresponding to the ink amount set $\phi$ of each lattice point may be acquired from the spectral reflectivity database RDB (for example, for a coated paper).

Fig. 20B shows the relation between the ink area coverage $f_c$ and the ink amount $d_c$ used in the cell division model. Here the range 0 to $d_{cmax}$ of the ink amount of one type of ink is divided into three intervals, and a virtual ink area coverage $F_c$ used in the cellular model is obtained by a non-linear curve that increases monotonously from 0 to 1 for each segment. The ink area coverages $f_m$, fy are similarly obtained for other inks.

Fig. 20C shows a method for calculating the predicted spectral reflectivity $R_s(\lambda)$ for a case of performing printing with an arbitrary ink amount set ($d_c$, $d_m$) in the cell C5 in the center of Fig. 20A. The predicted spectral reflectivity $R_s(\lambda)$ in a case of printing with the ink amount set ($d_c$, $d_m$) is provided with the following formula.

$$R_s(\lambda) = \left( \sum a_i R_i(\lambda)^{1/n} \right)^n$$
$$= \left( a_{11} R_{11}(\lambda)^{1/n} + a_{12} R_{12}(\lambda)^{1/n} + a_{21} R_{21}(\lambda)^{1/n} + a_{22} R_{22}(\lambda)^{1/n} \right)^n \quad \cdots (4)$$
$$a_{11} = (1 - f_c)(1 - f_m)$$
$$a_{12} = (1 - f_c) f_m$$
$$a_{21} = f_c (1 - f_m)$$
$$a_{22} = f_c f_m$$

Here, the ink composition area coverages $f_c$, $f_m$ in formula (4) are values provided by the graph in Fig. 20B. It is possible for the spectral reflectivities $R_{11}(\lambda)$, $R_{12}(\lambda)$, $R_{21}(\lambda)$, and $R_{22}(\lambda)$ corresponding to four lattice points surrounding the cell C5 to be acquired by referencing the spectral reflectivity database RDB. In so doing, it is possible to establish all of the values configuring the right side of formula (4), and it is possible for the predicted spectral reflectivity $R_s(\lambda)$ in a case of performing printing with an arbitrary ink amount set $\phi$ ($d_c$, $d_m$) to be calculated as the calculation results. By

the wavelength $\lambda$ being sequentially shifted in the visible wavelength region, it is possible for the spectral reflectivity $R_s(\lambda)$ in the visible light region to be obtained. If the ink amount space is divided into a plurality of cells, it is possible for predicted spectral reflectivity $R_s(\lambda)$ to be more precisely calculated compared to a case of not dividing.

In the above way, the RPM P3a2 predicts the predicted spectral reflectivity $R_s(\lambda)$ according to a request form the ICM P3a1.

When the predicted spectral reflectivity $R_s(\lambda)$ is obtained, the color calculation module (CCM) P3a3 predicts the predicted color value when a plurality of observation light sources L0 irradiates the matter with the predicted spectral reflectivity $R_s(\lambda)$. For example, the L*a*b* value of the CIE L*a*b* color space may be used in the predicted color value. The flow that calculates the predicted color value is the same as that shown in Fig. 14 and formula (1).

$$X = k \int P(\lambda)R_s(\lambda)x(\lambda)d\lambda$$
$$Y = k \int P(\lambda)R_s(\lambda)y(\lambda)d\lambda \qquad \cdots (5)$$
$$Z = k \int P(\lambda)R_s(\lambda)z(\lambda)d\lambda$$

As shown in formula (5), the spectrum of the spectral energy of each light source is multiplied in the predicted spectral reflectivity $R_s(\lambda)$, convolution integrated by a color-matching function, and the predicted color value $L_d$, $a_d$, $b_d$ is obtained by further converting the tristimulus value to the L*a*b* value. The predicted color value is calculated for each observation light source L0.

The evaluation value calculation module (ECM) P3a4 calculates the color difference $\Delta E$ between the target color values L2ij, a2ij, b2ij and the predicted color value $L_d$, $a_d$, $b_d$ for each observation light source. The color difference may be calculated by $\Delta E = \{(L_d-L_D)^2 + (a_d - a_D)^2 + (b_d - b_D)^2\}^{1/2}$ or may be calculated based on the CIE DE 2000 color difference formula ($\Delta E_{2000}$). In a case in which the D50, D65, and A light sources are selected as the observation light source L0, the color difference for each light source are denoted by $\Delta E_{D50}$, $\Delta E_{D65}$, and $\Delta E_A$. The evaluation value I ($\phi$) that evaluates the proximity to the target color values $L_D$, $a_D$, $b_D$ is an evaluation relationship that depends on the ink usage amounts $d_c$, $d_m$, dy, $d_k$, $d_{lc}$, $d_{lm}$, and, for example, may be calculated by the following formula.

$$I(\phi) = \frac{\sum_{j=1}^{N}(w_j \Delta E_j)}{N} \qquad \cdots (6)$$

Here, j represents the observation light source. In the above-described example, j=1 represents a D50 light source, j=2 represents a D65 light source, and j=3 represents an A light source. Ni represents the number of selected observation light sources. $\Delta E_j$ represents the color difference between the target color values $L_D$, $a_D$, $b_D$ and the predicted color value $L_d$, $a_d$, $b_d$ under the observation light source j. $w_j$ represents a weighting with respect to the color difference $\Delta E_j$ under each observation light source. In the embodiment, although the weighting $w_j$ is described as being uniform, the weighting is also preferably not uniform.

The evaluation value I ($\phi$) becomes smaller when each color difference $\Delta E_j$ is reduced, and has the characteristic of becoming smaller as the target color value and the predicted color value become smaller comprehensively for each observation light source. By the ICM P3a1 outputting the ink amount set $\phi$ to the RPM P3a2, the CCM P3a3, and the EDM P3a4, the final evaluation value I ($\phi$) is returned to the ICM P3a1. The ICM P3a1 calculates the optimum solution of the ink amount set $\phi$ so that evaluation value I ($\phi$) is minimized as an objective relationship. It is possible to use a non linear optimization method, such as a gradient method, as the method for calculating the optimum solution.

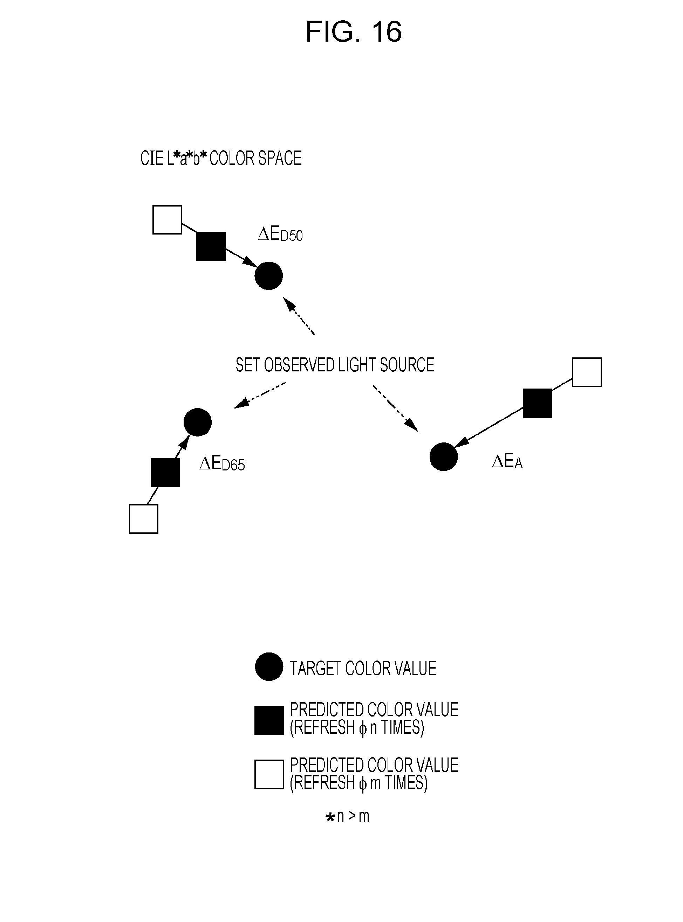

Fig. 16 shows the transition of the predicted color value $L_d$, $a_d$, $b_d$ under each observation light source when target color values $L_D$, $a_D$, $b_D$ and the ink amount set $\phi$ are optimized under each observation light source in the CIE L*a*b* color space. The ink amount set $\phi$ ($d_c$, $d_m$, dy, $d_k$, $d_{lc}$, $d_{lm}$) is optimized so that each color difference $\Delta E_j$ is gradually reduced. In this way, a possible ink amount set $\phi$ in which the color of the color value that approaches the target color values $L_D$, $a_D$, $b_D$ is able to be reproduced in the color reproduction image 160 for each observation light source is calculated.

It is possible for the finishing conditions for the optimization process to set to when the color difference $\Delta E_j$ reaches the threshold $TE_j$ or lower. The threshold $TE_j$ is provided for each observation light source j, and may be not only the same value, but also values different to one another. When $\Delta E_j \leq TE_j$ for all of the observation light sources, the optimization process finished. In this way, the prediction unit U32 predicts the usage amount of the second coloring material CL2.

8. Example of Forming Color Reproduction Image

Fig. 17 shows an example of a color reproduction image output control process performed by the proof device (image forming apparatus) 100 in which the LUT 200 is recorded. The process begins when the proof device 100 receives a request to form the color reproduction image 160.
When the process starts, the proof device 100 acquires the input data corresponding to the usage amounts Dc, Dm, Dy, Dk of the CMYK coloring material CL1 used in formation of the printed matter 350 with the printing device 300 (S302). The LUT 200 used in the color conversion process is selected in S304, as necessary.
In S306, the data of the CMYK coloring material usage amounts Dc, Dm, Dy, Dk are converted to data of the usage amounts $d_c$, $d_m$, dy, $d_k$, $d_{lc}$, $d_{lm}$ of the CMYLlclm coloring material CL2 used in formation of the color reproduction image 160 with the proof device 100, with reference to the LUT 200. In a case in which there is no input point of the LUT 200 that matches the coloring material usage amounts Dc, Dm, Dy, Dk, the $d_c$, $d_m$, dy, $d_k$, $d_{lc}$, $d_{lm}$ corresponding to the Dc, Dm, Dy, Dk may be interpolated using the CMYLlclm coloring material usage amounts $d_c$, $d_m$, dy, $d_k$, $d_{lc}$, $d_{lm}$ according to each of the plurality of input points that neighbor the coloring material usage amounts Dc, Dm, Dy, Dk in the CMYK color space. In this way, it is possible for the CMYK coloring material usage amounts Dc, Dm, Dy, Dk to be converted to the CMYLlclm coloring material usage amounts $d_c$, $d_m$, dy, $d_k$, $d_{lc}$, $d_{lm}$ according to the LUT 200.
In S308, a halftone process is performed with respect to the data of the coloring material usage amounts $d_c$, $d_m$, dy, $d_k$, $d_{lc}$, $d_{lm}$, and multivalue data representing the formation situation of dots corresponding to the usage amounts $d_c$, $d_m$, dy, $d_k$, $d_{lc}$, $d_{lm}$ is generated. It is possible for a dither method, error dispersion method, a density pattern method, or the like to be used in the halftone process. In S310, the output control data is generated by allocating the multivalue data that represents the formation situation of the obtained dot to each scanning pass and each nozzle 21a of the recording head 21. The recording head 21 forms ink dots on the printing medium M2 according to the output control data, and the proof 150 having the color reproduction image 160 is formed. The obtained color reproduction image 160 and the printed image 360 formed with the printing device 300 have excellent color precision when measured with a standard colorimetry device 801 in the printing system SY2.

9. Example of Adjusting Graininess of Color Reproduction Image During Source LUT Generation

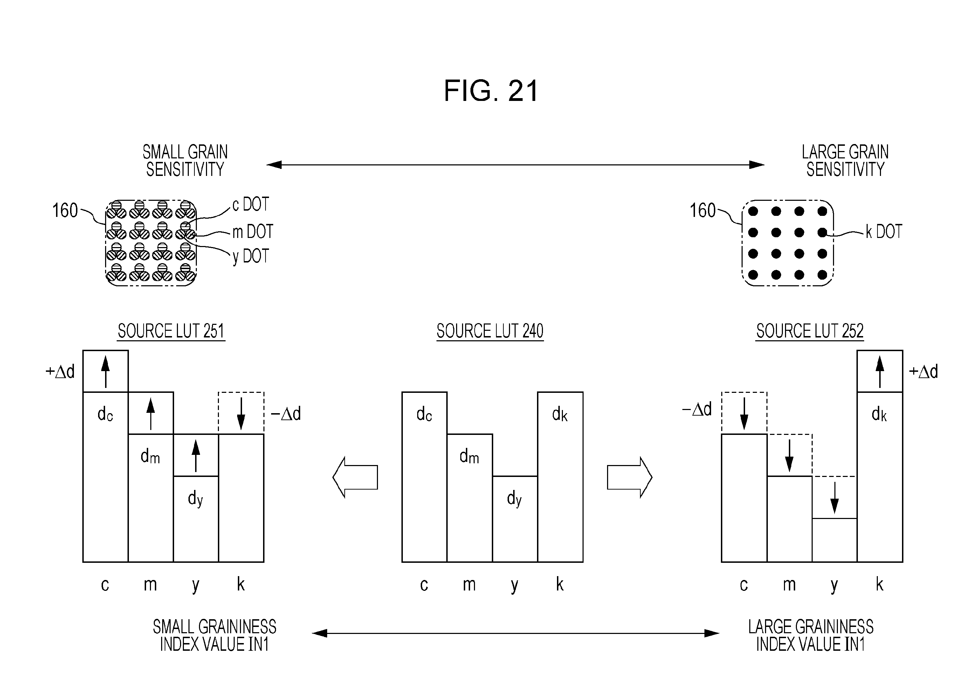

Fig. 21 is a drawing schematically showing a condition of adjusting the graininess of a color reproduction image 160 during generation of the source LUT.
It is possible for the source LUT in which the graininess of the color reproduction image 160 is changed, for example, to be generated by changing the output usage amounts $d_c$, $d_m$, dy, $d_k$, $d_{lc}$, $d_{lm}$ of the above-described source LUT 240. The example shown in Fig. 21 shows, for easy comprehension, a condition in which at least a portion of the k usage amount $d_k$ and at least a portion of the cmy usage amount are substituted in a case in which one k dot has the same value as a combination of one c dot, one m dot, and one y dot. When at least a portion $\Delta d$ of the k usage amount $d_k$ in a desired region in the input color space is substituted with the cmy usage amount, for the desired region, a source LUT 251 is generated in which a color reproduction image 160 with a low feeling of graininess with few or no k dots with a low graininess index value IN1, that is, a comparatively low brightness, and with numerous cmy dots with a comparatively high brightness is formed. When at least a portion $\Delta d$ of the cmy usage amounts $d_c$, $d_m$, dy of the desired region is substituted with the k usage amount, it is possible to generate the source LUT 252 in which a color reproduction image 160 with a high feeling of graininess with few or no cmy dots with a high graininess index value IN1, that is, a comparatively high brightness, and with numerous cmy dots with a comparatively low brightness is formed.
In order to change the feeling of graininess in the color reproduction image 160, the one c dot and at least two lc dots may be substituted, or one m dot and two or more lm dots may be substituted. When at least a portion $\Delta d$ of the c usage amount $d_c$ in a desired region is substituted with the lc usage amount, or the at least a portion $\Delta d$ of the m usage amount $d_m$ is substituted with the lm usage amount, a source LUT 251 is generated in which a color reproduction image 160 with a low feeling of graininess with few or no cm dots with a low graininess index value IN1, that is, a comparatively low brightness, and with numerous lclm dots with a comparatively high brightness is formed, for the desired region.
The source LUTs 251 and 252 may be used based on the graininess index value IN1.
It is possible for the graininess index value IN1 in which the graininess of the color reproduction image 160 is quantified to be represented by the following formula.

$$IN1 = a_L \int \sqrt{WS(u)} VTF(u) du \qquad \cdots (7)$$

Here, $a_L$ is the brightness correction item, WS(u) is the Wiener spectrum of the image, VTF is the visual space frequency characteristics, and u is the spatial frequency. The concept of the graininess index value IN1 is shown, for example, in Makoto Fujino, Image Quality Evaluation of Inkjet Prints, Japan Hardcopy '99, pp. 291 to 294. Although the formula (7) is shown one-dimensionally, it is easy to calculate the spatial frequency of a two-dimensional image as the relationship of the spatial frequencies u and v.

The graininess index value IN1 is the feeling of graininess (or the extent of noise) sensed by an observer when a given color reproduction image is visually confirmed by the observer. The lower the IN1, the less the feeling of graininess is sensed by the observer. Naturally, it is possible for IN1 to use another formula, if the index value evaluates the graininess when the color reproduction image is formed. The details for obtaining the graininess index value IN1 are illustrated in JP-T-2007-516663.

The graininess index value IN1 is stored in the source LUT in the storage unit U11 of the proof device 100 shown in Fig. 1, and it is possible to perform calculation based on multivalue data for forming the color reproduction image 160 obtained by the color conversion referencing the source LUT of S306 in Fig. 17 and the halftone process in S308, that is, multivalue data that represents the formation situation of dots according to the coloring material usage amounts $d_c$, $d_m$, dy, $d_k$, $d_{lc}$, $d_{lm}$. If there is multivalue data, it is possible to obtain IN1 by simulating the dot formation situation even without forming the color reproduction image 160 on the printing medium M2 in practice. Accordingly, when the IN1 is obtained from multivalue data obtained by performing the halftone process with respect to the solid image

(broadly speaking, a uniform image) of the output usage amounts $d_c$, $d_m$, dy, $d_k$, $d_{lc}$, $d_{lm}$ associated with each lattice point G1 that configures the source LUT, it is possible to associate the graininess index value IN1 with each lattice point G3 and G4. Naturally, the color reproduction image 160 formed on the printing medium M2 may be read by an image reading device, such as a scanner, the multivalue data for forming the color reproduction image 160 may be acquired based on the read information, and IN1 may be calculated based on the multivalue data.

10. Example of Adjusting Graininess of Color Reproduction Image During Source LUT Generation

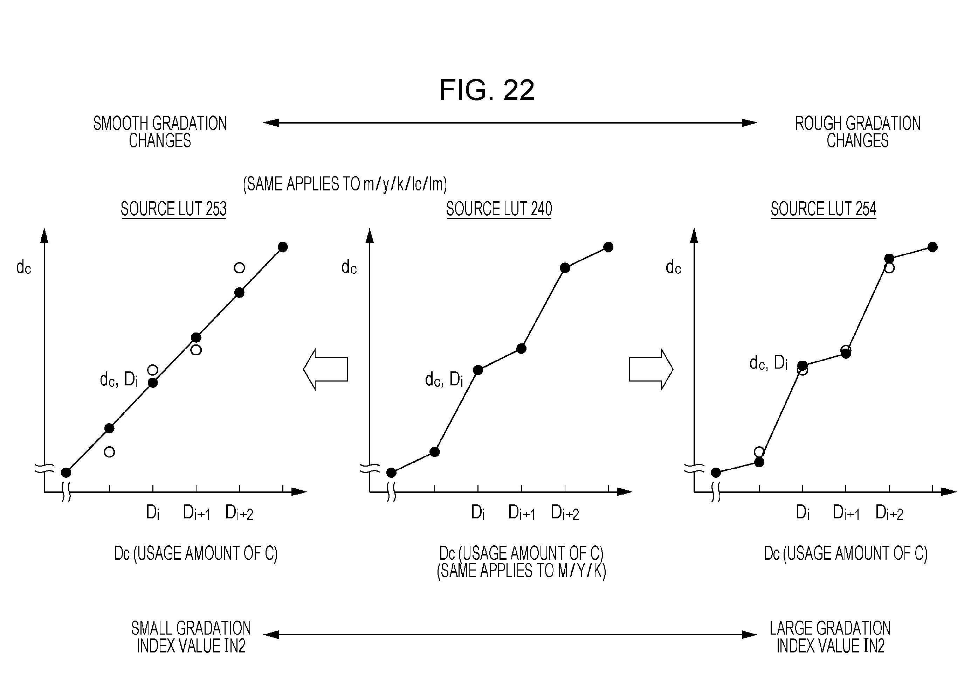

Fig. 22 schematically shows a condition of adjusting the graininess of a color reproduction image 160 during generation of the source LUT.

It is possible for the source LUT in which the gradation properties of the color reproduction image 160 are changed, for example, to be generated by changing the output usage amounts $d_c$, $d_m$, dy, $d_k$, $d_{lc}$, $d_{lm}$ of the above-described source LUT 240. The example shown in Fig. 22 shows the input usage amount Dc, of the CMYK color space, that is, the coordinates of C of the lattice points, on the horizontal axis and shows the c output usage amount $d_c$ of the cmyklclm color space, that is, the usage amount of the second coloring material CL2 stored in the lattice points on the vertical axis. Naturally, it is possible to apply the input usage amounts Dm, Dy, Dk of the M, Y, and K of the CMYK color space to the horizontal axis, and to apply the output usage amounts $d_m$, dy, $d_k$, $d_{lc}$, $d_{lm}$ of the m, y, k, lc, and lm of the cmyklclm color space to the vertical axis. In Fig. 22, the white circles shown in the source LUTs 253 and 254 show the output usage amounts $d_c$ in the source LUT 240. In the example of Fig. 22, the input usage amount variable $D_i$ (i is an integer from 1 to n, n is an integer of 3 or more) is provided at regular intervals on the Dc axis, and the output usage amount relationship $d_c$ ($D_i$) corresponding to Di is shown.

The wording "gradation changes are smooth" signifies that the fluctuations of the minute changes $\Delta d_c(D_i) = \{d_c(D_i+1) - d_c(D_i)\}/\Delta D$ of the output usage amount relationship $d_c$ ($D_i$) are small. The wording "gradation changes are coarse" signifies that the fluctuations in the minute changes $\Delta d_c$ ($D_i$) are large. The gradation index value IN2 may define the average of the absolute value of the minute changes $\Delta\Delta d_c$ ($D_i$) = $\{\Delta d_c$ ($D_{i+1}$)-$\Delta d_c$ ($D_i$)$\}/\Delta D$ of the minute changes $\Delta d_c$ ($D_i$).

$$IN2 = \Sigma \{|\Delta\Delta d_c (D_i)|\} / (n-2)$$

where E signifies the sum total of $\{|\Delta\Delta d_c(Di)|\}$ from i = 1 to i = n-2.

The obtained gradation index value IN2 signifies that the gradation changes are smoother as the value decreases, and signifies that the gradation changes are rougher as the value increases. Accordingly, when the usage amount (for example, $d_c$) of the second coloring material CL2 is changed so that the changes in the usage amount (for example, $d_c$) of the second coloring material CL2 fluctuates as little as possible with respect to change in the usage amount (for example, Dc) of the first coloring material CL1 (Dc), it is possible to generate the source LUT 253 in which the color reproduction image 160 with a low gradation index value IN2, that is, smooth gradation changes, is formed.

When the usage amount (for example, $d_c$) of the second coloring material CL2 is changed so that the changes in the usage amount (for example, $d_c$) of the second coloring material CL2 fluctuate as little as possible with respect to changes in the usage amount (for example, Dc) of the first coloring material CL1, it is possible to generate the source LUT 254 in which the color reproduction image 160 with a high gradation index value IN2, that is, coarse gradation changes, is formed.

The source LUTs 253 and 254 may be used based on the gradation index value IN2.

11. Modification Example

Various modification examples of the invention are considered.

For example, in a case in which a recording device, such as a printer, is connected to a computer which the LUT 200 is stored, the usage amount of the second coloring material is obtained from the usage amount of the first coloring material according to the LUT 200, and the color reproduction image is formed by the recording apparatus so as to reach the obtained usage amount of the second coloring material, the computer and the recording apparatus configure the image forming apparatus. The image forming apparatus, in addition to the recording device, includes an image output device, such as a display. The image on the screen of the image output device is included in the color reproduction image.

The first coloring material used in formation of the printed matter with the printer, in addition to the combination of CMYK, may be a combination of five colors, a combination of three colors, or the like. The second coloring material used in formation of the color reproduction image with the image forming apparatus, in addition to the combination of CMYKlclm, may be a combination of seven or more colors, or may be a combination of five or fewer colors. In addition to cmyklclm, or (orange), gr (green), b (blue), v (violet), dy (dark yellow), lk (light black), llk (light light black), color free, or the like, are included in the colors of coloring material usable as the second coloring material. A coloring material that contributes glossiness to the printing medium, a coloring material that protects a colored coloring material, or the like, are included in the colorless coloring material.

It is possible for the above-described process to be modified, as appropriate, by transposing the order or the like. For example, in the first colorimetry results acquisition process in Fig. 6, a process that outputs the acquisition conditions in S106 after the process that outputs the first colorimetry results in S116 may be performed.

Even though it is preferable that the LUT be able to be generated with good efficiency when the configuration of the color chart 361 is the same as the configuration of the second color chart 161 for generating the LUT, the image printed matter formed by the printer (for example, printing device 300) for generating the correction data (T1) may be an image printed matter of a different configuration to the configuration of the second color chart 161. Even though it is preferable that it be possible to calculate the color precision without performing the interpolation when the configurations of the color chart 361 and the second color chart 161 are the same, even if the configuration of the color chart 361 and the second color chart 161 are different, it is possible to calculate the color precision by performing the interpolation operation.

Even though it is preferable that the color precision be improved by matching the usage model of the colorimetry apparatus when the correction data (T1) is created for each model of the standard first colorimetry apparatus, a case of the correction data (T1) not being separate by model of colorimetry apparatus is also included in the technology. Even though it is preferable that the color precision be improved by matching the printing conditions DT1 when the correction data (T1) is created for each of the printing conditions DT1 set with respect to the formation of the printed matter 350, a case of the correction data (T1) that is not separate by printing conditions is also included in the technology.

12. Conclusion

As described above, according to the invention, it is possible to provide, through various forms, a technology or the like in which the color precision is able to be improved in a case of using an LUT in which the usage amount of a coloring material of a printer and the usage amount of a coloring material of an image forming apparatus are associated. Naturally, even in a technology or the like with only the constituent features according to the independent aspects without having the constituent features of the dependent aspects, the above-described basic actions and effects are obtained.

A configuration in which each configuration disclosed in the above-described embodiments and modification examples are substituted or combined with one another, and a configuration in which a known technology and the configurations disclosed in the above-described embodiments and modification examples are substituted or combined with one another, and the like are able to be achieved. The invention also includes these configurations.

The foregoing description has been given by way of example only and it will be appreciated by a person skilled in the art that modifications can be made without departing from the scope of the present invention.

**Claims**

1. A method for generating a lookup table that generates a lookup table (200) in which a usage amount (Di) of a first coloring material (CL1) used in formation of a printed matter (M1) by a printer (300) and a usage amount (di) of a second coloring material (CL2) used in formation of a color reproduction image (160) by an image forming apparatus (100) are associated, the method comprising:

   generating correction data that corrects a difference between a first colorimetry result (L1, a1, b1) in which color of an image printed matter formed with a printer is measured with a first colorimetry apparatus (801) and a second colorimetry result (L2, a2, b2) in which color of the image printed matter is measured with a second colorimetry apparatus (802); and
   correcting a source lookup table (240) so that a correspondence relationship between the usage amounts of the first and second coloring materials stipulated in the source lookup table and a correspondence relationship based on the colorimetry results by the first colorimetry apparatus by referencing the correction data to generate a lookup table.

2. The method for generating a lookup table according to claim 1,
   wherein the lookup table stipulates a correspondence relationship between the usage amounts of the first and second coloring materials regarding a plurality of first lattice points (G1) included in an input color space represented by a color of the first coloring material, and
   a color chart printed matter having a color patch (362) associated with a second lattice point (G2) that is at least a portion of the first lattice points is used as the image printed matter in generating the correction data.

3. The method for generating a lookup table according to claim 2,
   wherein a color chart printed matter in which a color patch associated with the second lattice point with a higher density (DE1) of the second lattice points in a first region (R1) than a density (DE2) of the second lattice points in a second region (R2) other than the first region including the specified color in the input color space is used as the image printed matter in generating the correction data.

4. The method for generating a lookup table according to claim 2 or claim 3, further comprising:

   generating a source lookup table (240) by stipulating a correspondence relationship between the usage amounts of the first and second coloring materials based on second colorimetry results in which color of the color chart is measured with the second colorimetry apparatus.

5. The method for generating a lookup table according to claim 4,
   wherein the correcting the source lookup table includes
   generating a second color chart (361) as the color reproduction image by converting chart data for forming the color chart printed matter with the printer (100) according to the source lookup table (240),
   acquiring third measurement results (L3, a3, b3) by measuring color of the second color chart with the second colorimetry apparatus (802),
   converting the third colorimetry results to colorimetry results (L4, a4, b4) with the first colorimetry apparatus (801) based on the correction data, and
   correcting the source lookup table so as to be in a standard in a case in which a difference between the converted colorimetry results and the first colorimetry results are outside standard.

6. The method for generating a lookup table according to claim 5,
   wherein the generating the source lookup table includes associating a usage amount of the first coloring material with a target color value based on the second colorimetry results,
   predicting a usage amount of the second coloring material such that the color value approaches the target color value of the second coloring material by which the color reproduction image is formed, by the second colorimetry apparatus, and
   generating the source lookup table by associating the usage amount of the first coloring material and the predicted usage amount of the second coloring material, and
   wherein, the source lookup table is corrected by amending the target color value so as to be in the standard in a case in which the difference ($\Delta$E) between the converted colorimetry results and the first colorimetry results are outside the standard, in the correcting the source lookup table.

7. The method for generating a lookup table according to any one of the preceding claims, further comprising:

acquiring usage model information (DT2) indicating the usage model used in order to generate the lookup table from a plurality of models which is included for the first colorimetry apparatus,
wherein, the correction data is generated according to the usage model for each of the plurality of models, in the generating the correction data, and
wherein, by referencing the correction data according to the usage model indicated by the acquired usage model information, the lookup table is generated by correcting the source lookup table (240) so that the correspondence relationship between the usage amounts of the first and second coloring materials stipulated in the source lookup table approaches the correspondence relationship based on the colorimetry results using the usage model in the correcting the source lookup table.

8. The method for generating a lookup table according to any one of the preceding claims, further comprising:

acquiring printing conditions (DT1) used in order to generate the lookup table from a plurality of printing conditions able to be set with respect to formation of the printed matter, and
acquiring usage model information (DT2) indicating the usage model used in order to generate the lookup table from a plurality of models which is included for the first colorimetry apparatus,
wherein, the correction data is generated according to the printing conditions and the model that configure a combination for each combination of the printing conditions and the model in the generating the correction data, and
wherein, by referencing the correction data according to the combination of the acquired printing conditions and the usage model indicated by the acquired usage model information, the lookup table (200) is generated by correcting the source lookup table so that the correspondence relationship between the usage amounts of the first and second coloring materials stipulated in the source lookup table approaches the correspondence relationship based on the colorimetry results using the usage model in the correcting the source lookup table.

9. The method for generating a lookup table according to any one of the preceding claims,
wherein, the correction data is generated using an image printed matter formed with the printer for each of a plurality of printing conditions able to be set with respect to formation of the printed matter in the generating the correction data.

10. A color conversion device comprising:

a storage unit (U11) that stores a lookup table, in which a usage amount (Di) of a first coloring material (CL1) used in formation of a printed matter (M1) by a printer (300) and a usage amount (di) of a second coloring material (CL2) used in formation of a color reproduction image (160) by an image forming apparatus (100) are associated, generated by correcting a source lookup table (240) so that a correspondence relationship between the usage amounts of the first and second coloring materials stipulated in the source lookup table approaches a correspondence relationship based on the colorimetry results by a first colorimetry apparatus (801) by referencing the correction data that corrects a difference between a first colorimetry result (L1, a1, b1) in which color of an image printed matter formed with the printer is measured with the first colorimetry apparatus and a second colorimetry result (L2, a2, b2) in which color of the image printed matter is measured with a second colorimetry apparatus (802), and
a color conversion unit (U12) that performs color conversion with reference to the lookup table.

# FIG. 1

SY1

100

PROOF DEVICE

(Dc, Dm, Dy, Dk)

U11
200
U12

LUT

(d_c, d_m, d_y, d_k, d_lc, d_lm)

HALFTONE

CL2                    CL2

C  M  Y  K  Ic  Im

300

PRINTING DEVICE

CL1

CL4  CL4  CL4  CL3

C  M  Y  K

350          M1
150          M2

360          160

D50    F10    F2

L1    L2    L3

L0

# FIG. 2

# FIG. 3

LUT 200, SOURCE LUT 240

M (FIX K VALUE TO GIVEN VALUE)

SMALL LATTICE POINT LUT 210 (N3 POINTS)

(N1=Ng$^4$ POINTS)

Y

G1

G5

$\left(\begin{array}{c}\text{DENSITY}\\\text{DE2}\end{array}\right)$

C

Rb
R1c
G3
G4
R1
R2
R9
G4
$\left(\begin{array}{c}\text{DENSITY}\\\text{DE1}\end{array}\right)$
PARTIAL LUT 230 (Np POINTS)

COORDINATES IN CMYK COLOR SPACE (Dc, Dm, Dy, Dk)
LATTICE POINT INK AMOUNT (dc, dm, dy, dk, dlc, dlm)

● TOTAL N2 POINTS OF SECOND LATTICE POINTS G3, G4, G5
(TOTAL N2 POINTS OF LATTICE POINTS G2 OF INTERMEDIATE LUT 245)

# FIG. 4

DB1

| TABLE NO. | PRINTING CONDITIONS | | | | COLORIMETRY DEVICE | |
|---|---|---|---|---|---|---|
| | PRINTING FORMAT | RESOLUTION | MEDIA | COLORING MATERIAL | | |
| 1 | ⋮ | ⋮ | ⋮ | ⋮ | ⋮ | ⌇T1 |
| 2 | ⋮ | ⋮ | ⋮ | ⋮ | ⋮ | ⌇T1 |
| ⋮ | ⋮ | ⋮ | ⋮ | ⋮ | ⋮ | |
| ⋮ | OFFSET | DPI1 | Ma | ⋮ | MODEL a OF COMPANY A | ⌇T11, T1 |
| ⋮ | AS ABOVE | AS ABOVE | AS ABOVE | ⋮ | MODEL b OF COMPANY A | ⌇T12, T1 |
| ⋮ | AS ABOVE | AS ABOVE | AS ABOVE | ⋮ | MODEL a OF COMPANY B | ⌇T13, T1 |
| ⋮ | AS ABOVE | AS ABOVE | AS ABOVE | ⋮ | MODEL b OF COMPANY B | ⌇T1 |
| ⋮ | ⋮ | ⋮ | ⋮ | ⋮ | ⋮ | |
| ⋮ | AS ABOVE | AS ABOVE | Mb | ⋮ | MODEL a OF COMPANY A | ⌇T14, T1 |
| ⋮ | AS ABOVE | AS ABOVE | AS ABOVE | ⋮ | MODEL b OF COMPANY A | ⌇T1 |
| ⋮ | AS ABOVE | AS ABOVE | AS ABOVE | ⋮ | MODEL a OF COMPANY B | ⌇T1 |
| ⋮ | AS ABOVE | AS ABOVE | AS ABOVE | ⋮ | MODEL b OF COMPANY B | ⌇T1 |
| ⋮ | ⋮ | ⋮ | ⋮ | ⋮ | ⋮ | |
| ⋮ | AS ABOVE | DPI2 | Ma | ⋮ | MODEL a OF COMPANY A | ⌇T15, T1 |
| ⋮ | AS ABOVE | AS ABOVE | AS ABOVE | ⋮ | MODEL b OF COMPANY A | ⌇T1 |
| ⋮ | AS ABOVE | AS ABOVE | AS ABOVE | ⋮ | MODEL a OF COMPANY B | ⌇T1 |
| ⋮ | AS ABOVE | AS ABOVE | AS ABOVE | ⋮ | MODEL b OF COMPANY B | ⌇T1 |
| ⋮ | ⋮ | ⋮ | ⋮ | ⋮ | ⋮ | |
| ⋮ | GRAVURE | DPI1 | Ma | ⋮ | MODEL a OF COMPANY A | ⌇T16, T1 |
| ⋮ | AS ABOVE | AS ABOVE | AS ABOVE | ⋮ | MODEL b OF COMPANY A | ⌇T1 |
| ⋮ | AS ABOVE | AS ABOVE | AS ABOVE | ⋮ | MODEL a OF COMPANY B | ⌇T1 |
| ⋮ | AS ABOVE | AS ABOVE | AS ABOVE | ⋮ | MODEL b OF COMPANY B | ⌇T1 |
| ⋮ | ⋮ | ⋮ | ⋮ | ⋮ | ⋮ | |
| ⋮ | FLEXO | DPI1 | Ma | ⋮ | MODEL a OF COMPANY A | ⌇T1 |
| ⋮ | AS ABOVE | AS ABOVE | AS ABOVE | ⋮ | MODEL b OF COMPANY A | ⌇T1 |
| ⋮ | AS ABOVE | AS ABOVE | AS ABOVE | ⋮ | MODEL a OF COMPANY B | ⌇T1 |
| ⋮ | AS ABOVE | AS ABOVE | AS ABOVE | ⋮ | MODEL b OF COMPANY B | ⌇T1 |
| ⋮ | ⋮ | ⋮ | ⋮ | ⋮ | ⋮ | |

# FIG. 5

# FIG. 6

PRINTING SYSTEM SY2

FIRST COLORIMETRY RESULTS
ACQUISITION PROCESS

S102
CONDITION ACQUISITION
· PRINTING CONDITION ACQUISITION (S103)
· USAGE MODEL INFORMATION
  ACQUISITION BY COLORIMETRY DEVICE (S104)

S106
ACQUIRED CONDITION OUTPUT
· PRINTING CONDITIONS DT1
· USAGE MODEL INFORMATION DT2 BY COLORIMETRY
  DEVICE

SY3

S108
EXECUTE
COLOR MEASUREMENT OF COLOR
CHART?

NO

YES

S110
ACQUIRE CHART DATA
EXAMPLE: (Dci, Dmi, Dyi, Dki)

S112
PRINT COLOR CHART

351

S114
ACQUIRE FIRST COLORIMETRY RESULTS
EXAMPLE: (L1, a1, b1)

801

S116
OUTPUT FIRST COLORIMETRY RESULTS

END

# FIG. 7

IMAGE GENERATION SYSTEM SY3

( LUT GENERATION PROCESS )

┌─────────────────────────────────────────────┐ ⌐S200
│ ACQUIRE PRINTING CONDITIONS DT1, USAGE MODEL │
│ INFORMATION DT2, AND FIRST COLORIMETRY RESULTS │
└─────────────────────────────────────────────┘

┌────┐
│ 351 │
└────┘

┌─────────────────────────────────────────────┐ ⌐S202
│ ACQUIRE SECOND COLORIMETRY RESULTS BY │
│ MEASURING COLOR OF COLOR CHART PRINTED MATTER │◄── ┌────┐
│ EXAMPLE: (L2, a2, b2) │     │ 802 │
└─────────────────────────────────────────────┘     └────┘

IS THERE
COLORIMETRY VALUE CORRECTION     ⌐S204    YES
TABLE?

NO

┌─────────────────────────────────────────────┐ ⌐S206
│ COLORIMETRY VALUE │
│ CORRECTION TABLE GENERATION │
│ EXAMPLE: (L1-L2, a1-a2, b1-b2) │
└─────────────────────────────────────────────┘

┌─────────────────────────────────────────────┐ ⌐S208
│ REGISTER IN DATABASE │
└─────────────────────────────────────────────┘

┌─────────────────────────────────────────────┐ ⌐S210
│ ACQUIRE COLORIMETRY VALUE │
│ CORRECTION TABLE FROM DATABASE │
└─────────────────────────────────────────────┘

( 1 )

# FIG. 8

1

**S212**
TARGET COLOR VALUE SETTINGS FOR EACH i
EXAMPLE: (Dc, Dm, Dy, Dk) – (L2, a2, b2)

**S214**
PREDICT USAGE AMOUNT OF SECOND
COLORING MATERIAL FOR EACH i
EXAMPLE: $(d_c, d_m, d_y, d_k, d_{lc}, d_{lm})$

**S216**
GENERATE SOURCE LUT
EXAMPLE: (Dc, Dm, Dy, Dk) – $(d_c, d_m, d_y, d_k, d_{lc}, d_{lm})$

**S218**
ACQUIRE CHART DATA
EXAMPLE: (Dci, Dmi, Dyi, Dki)

**S220**
PRINT COLOR CHART WITH
REFERENCE TO THE SOURCE LUT → **151**

**S222**
ACQUIRE THIRD COLORIMETRY RESULT
EXAMPLE: (L3, a3, b3) ← **802**

**S224**
CONVERT TO COLORIMETRY VALUE
OF FIRST COLORIMETRY APPARATUS
EXAMPLE: (L4, a4, b4) ← **T1**

**S226**
CALCULATE COLOR PRECISION
EXAMPLE: $\{(L4i - L1i)^2 + (a4i - a1i)^2 + (b4i - b1i)^2\}^{1/2}$

**S228**
OUTPUT DETERMINATION RESULTS

**S232**
AMEND TARGET COLOR VALUE
EXAMPLE: (L5, a5, b5)

**S230**
WITHIN
STANDARD? — NO

YES

END

# FIG. 9

500

| TARGET PRINTER | OFFSET PRINTER ▽ | 511 |
| RESOLUTION | ○○×○○dpi ▽ | 512 |
| SHEET | COATED PAPER ▽ | 513 |
| COLORING MATERIAL | ○○○ ▽ | 514 |
| MODEL OF COLORIMETRY DEVICE | MODEL a OF COMPANY A ▽ | 521 |

NEXT 531

OFFSET PRINTER ▽
OFFSET PRINTER
GRAVURE PRINTER
FLEXO PRINTER
...

COMPANY A MODEL a ▽
MODEL a OF COMPANY A
MODEL b OF COMPANY A
MODEL a OF COMPANY B
MODEL b OF COMPANY B
...

# FIG. 10

L11, L12

351                                          361  M1

801

| 1 | 2 | 3 | 4 | 5 | ······ |

362

······

i

802

······

······

T1

| PATCH NO. | CORRECTION VALUE |
|-----------|------------------|
| 1 | $(\Delta L_{c1}, \Delta a_{c1}, \Delta b_{c1})$ |
| 2 | $(\Delta L_{c2}, \Delta a_{c2}, \Delta b_{c2})$ |
| ... | ... |
| i | $(\Delta L_{ci}, \Delta a_{ci}, \Delta b_{ci})$ |
| ... | ... |
| N2 | $(\Delta L_{cN2}, \Delta a_{cN2}, \Delta b_{cN2})$ |

EXAMPLE: $\Delta L_{ci} = L1i - L2i$
$\Delta a_{ci} = a1i - a2i$
$\Delta b_{ci} = b1i - b2i$

# FIG. 11A

INPUT PROFILE PR1

G2

|  |  | CL1 |  |  |  |  |
|---|---|---|---|---|---|---|
| C | M | Y | K | L* | a* | b* |
| $D_{c1}$ | $D_{m1}$ | $D_{y1}$ | $D_{k1}$ | $L2_1$ | $a2_1$ | $b2_1$ |
| $D_{c2}$ | $D_{m2}$ | $D_{y2}$ | $D_{k2}$ | $L2_2$ | $a2_2$ | $b2_2$ |
| ⋮ | ⋮ | ⋮ | ⋮ | ⋮ | ⋮ | ⋮ |
| $D_{ci}$ | $D_{mi}$ | $D_{yi}$ | $D_{ki}$ | $L2_i$ | $a2_i$ | $b2_i$ |
| ⋮ | ⋮ | ⋮ | ⋮ | ⋮ | ⋮ | ⋮ |
| $D_{cN2}$ | $D_{mN2}$ | $D_{yN2}$ | $D_{kN2}$ | $L2_{N2}$ | $a2_{N2}$ | $b2_{N2}$ |

N2 POINTS

# FIG. 11B

OUTPUT PROFILE PR2

CL2

|  |  |  | CL2 |  |  |  |  |  |
|---|---|---|---|---|---|---|---|---|
| L* | a* | b* | C | M | Y | K | Ic | Im |
| $L2_1$ | $a2_1$ | $b2_1$ | $d_{c1}$ | $d_{m1}$ | $d_{y1}$ | $d_{k1}$ | $d_{lc1}$ | $d_{lm1}$ |
| $L2_2$ | $a2_2$ | $b2_2$ | $d_{c2}$ | $d_{m2}$ | $d_{y2}$ | $d_{k2}$ | $d_{lc2}$ | $d_{lm2}$ |
| ⋮ | ⋮ | ⋮ | ⋮ | ⋮ | ⋮ | ⋮ | ⋮ | ⋮ |
| $L2_i$ | $a2_i$ | $b2_i$ | $d_{ci}$ | $d_{mi}$ | $d_{yi}$ | $d_{ki}$ | $d_{lci}$ | $d_{lmi}$ |
| ⋮ | ⋮ | ⋮ | ⋮ | ⋮ | ⋮ | ⋮ | ⋮ | ⋮ |
| $L2_{N2}$ | $a2_{N2}$ | $b2_{N2}$ | $d_{cN2}$ | $d_{mN2}$ | $d_{yN2}$ | $d_{kN2}$ | $d_{lcN2}$ | $d_{lmN2}$ |

N2 POINTS

# FIG. 11C

INTERMEDIATE LUT 245

G2

|  |  | CL1 |  |  |  | CL2 |  |  |  |
|---|---|---|---|---|---|---|---|---|---|
| C | M | Y | K | C | M | Y | K | Ic | Im |
| $D_{c1}$ | $D_{m1}$ | $D_{y1}$ | $D_{k1}$ | $d_{c1}$ | $d_{m1}$ | $d_{y1}$ | $d_{k1}$ | $d_{lc1}$ | $d_{lm1}$ |
| $D_{c2}$ | $D_{m2}$ | $D_{y2}$ | $D_{k2}$ | $d_{c2}$ | $d_{m2}$ | $d_{y2}$ | $d_{k2}$ | $d_{lc2}$ | $d_{lm2}$ |
| ⋮ | ⋮ | ⋮ | ⋮ | ⋮ | ⋮ | ⋮ | ⋮ | ⋮ | ⋮ |
| $D_{ci}$ | $D_{mi}$ | $D_{yi}$ | $D_{ki}$ | $d_{ci}$ | $d_{mi}$ | $d_{yi}$ | $d_{ki}$ | $d_{lci}$ | $d_{lmi}$ |
| ⋮ | ⋮ | ⋮ | ⋮ | ⋮ | ⋮ | ⋮ | ⋮ | ⋮ | ⋮ |
| $D_{cN2}$ | $D_{mN2}$ | $D_{yN2}$ | $D_{kN2}$ | $d_{cN2}$ | $d_{mN2}$ | $d_{yN2}$ | $d_{kN2}$ | $d_{lcN2}$ | $d_{lmN2}$ |

N2 POINTS

# FIG. 11D

SOURCE LUT 240

G1

|  |  | CL1 |  |  |  | CL2 |  |  |  |
|---|---|---|---|---|---|---|---|---|---|
| C | M | Y | K | C | M | Y | K | Ic | Im |
| $D_{c1}$ | $D_{m1}$ | $D_{y1}$ | $D_{k1}$ | $d_{c1}$ | $d_{m1}$ | $d_{y1}$ | $d_{k1}$ | $d_{lc1}$ | $d_{lm1}$ |
| $D_{c2}$ | $D_{m2}$ | $D_{y2}$ | $D_{k2}$ | $d_{c2}$ | $d_{m2}$ | $d_{y2}$ | $d_{k2}$ | $d_{lc2}$ | $d_{lm2}$ |
| ⋮ | ⋮ | ⋮ | ⋮ | ⋮ | ⋮ | ⋮ | ⋮ | ⋮ | ⋮ |
| $D_{cN1}$ | $D_{mN1}$ | $D_{yN1}$ | $D_{kN1}$ | $d_{cN1}$ | $d_{mN1}$ | $d_{yN1}$ | $d_{kN1}$ | $d_{lcN1}$ | $d_{lmN1}$ |

N1 POINTS

# FIG. 12A

INPUT PROFILE PR3      (TARGET COLOR VALUE AMENDMENT)

G2

|  | CL1 | | | | | |
|---|---|---|---|---|---|---|
| C | M | Y | K | L* | a* | b* |
| $D_{c1}$ | $D_{m1}$ | $D_{y1}$ | $D_{k1}$ | $L5_1$ | $a5_1$ | $b5_1$ |
| ⋮ | ⋮ | ⋮ | ⋮ | ⋮ | ⋮ | ⋮ |
| $D_{ci}$ | $D_{mi}$ | $D_{yi}$ | $D_{ki}$ | $L5_i$ | $a5_i$ | $b5_i$ |
| ⋮ | ⋮ | ⋮ | ⋮ | ⋮ | ⋮ | ⋮ |
| $D_{cN2}$ | $D_{mN2}$ | $D_{yN2}$ | $D_{kN2}$ | $L5_{N2}$ | $a5_{N2}$ | $b5_{N2}$ |

N2 POINTS

# FIG. 12B

OUTPUT PROFILE PR4

|  |  |  | CL2 | | | | | |
|---|---|---|---|---|---|---|---|---|
| L* | a* | b* | C | M | Y | K | lc | lm |
| $L5_1$ | $a5_1$ | $b5_1$ | $d_{c1}$ | $d_{m1}$ | $d_{y1}$ | $d_{k1}$ | $d_{lc1}$ | $d_{lm1}$ |
| ⋮ | ⋮ | ⋮ | ⋮ | ⋮ | ⋮ | ⋮ | ⋮ | ⋮ |
| $L5_i$ | $a5_i$ | $b5_i$ | $d_{ci}$ | $d_{mi}$ | $d_{yi}$ | $d_{ki}$ | $d_{lci}$ | $d_{lmi}$ |
| ⋮ | ⋮ | ⋮ | ⋮ | ⋮ | ⋮ | ⋮ | ⋮ | ⋮ |
| $L5_{N2}$ | $a5_{N2}$ | $b5_{N2}$ | $d_{cN2}$ | $d_{mN2}$ | $d_{yN2}$ | $d_{kN2}$ | $d_{lcN2}$ | $d_{lmN2}$ |

N2 POINTS

# FIG. 12C

SOURCE LUT 241      (POST-CORRECTION)

G1

|  | CL1 | | |  | CL2 | | | | |
|---|---|---|---|---|---|---|---|---|---|
| C | M | Y | K | C | M | Y | K | lc | lm |
| $D_{c1}$ | $D_{m1}$ | $D_{y1}$ | $D_{k1}$ | $d_{c1}$ | $d_{m1}$ | $d_{y1}$ | $d_{k1}$ | $d_{lc1}$ | $d_{lm1}$ |
| ⋮ | ⋮ | ⋮ | ⋮ | ⋮ | ⋮ | ⋮ | ⋮ | ⋮ | ⋮ |
| $D_{cN1}$ | $D_{mN1}$ | $D_{yN1}$ | $D_{kN1}$ | $d_{cN1}$ | $d_{mN1}$ | $d_{yN1}$ | $d_{kN1}$ | $d_{lcN1}$ | $d_{lmN1}$ |

N1 POINTS

# FIG. 12D

FINAL LUT 200

G1

|  | CL1 | | |  | CL2 | | | | |
|---|---|---|---|---|---|---|---|---|---|
| C | M | Y | K | C | M | Y | K | lc | lm |
| $D_{c1}$ | $D_{m1}$ | $D_{y1}$ | $D_{k1}$ | $d_{c1}$ | $d_{m1}$ | $d_{y1}$ | $d_{k1}$ | $d_{lc1}$ | $d_{lm1}$ |
| ⋮ | ⋮ | ⋮ | ⋮ | ⋮ | ⋮ | ⋮ | ⋮ | ⋮ | ⋮ |
| $D_{cN1}$ | $D_{mN1}$ | $D_{yN1}$ | $D_{kN1}$ | $d_{cN1}$ | $d_{mN1}$ | $d_{yN1}$ | $d_{kN1}$ | $d_{lcN1}$ | $d_{lmN1}$ |

N1 POINTS

# FIG. 13

# FIG. 14

**OBSERVED LIGHT SOURCE**

SPECTRAL ENERGY $P(\lambda)$

$\lambda$

×

**TARGET**

1

SPECTRAL REFLECTIVITY $(\lambda)$

0

$\lambda$

×

**SAME COLOR RELATION**

1

$z(\lambda)$  $y(\lambda)$  $x(\lambda)$

0

$\lambda$

⬇ NORMALIZATION

3 STIMULUS VALUE (X, Y, Z)

⬇ CONVERSION FORMULA

COLOR VALUE (L*, a*, b*)

EP 2 899 964 A2

# FIG. 15

U33

PREDICTED USAGE AMOUNT ASSOCIATION PORTION
ASSOCIATION BETWEEN OPTIMUM SOLUTION
OF INK AMOUNT SET #THETA AND Dc, Dm, Dy, Dk

INPUT PROFILE
PR1j, PR3j, ···

Dc, Dm, Dy, Dk

OPTIMUM SOLUTION
OF INK AMOUNT SET φ

P3a1

ICM
REFRESH OF INK
SET AMOUNT φ

CALCULATE
OPTIMUM SOLUTION

INK SET AMOUNT φ

P3a2

(L2ij, a2ij, b2ij)

TARGET
COLOR
VALUE

RPM
SPECTRAL
PRINTING MODEL

EVALUATION
VALUE I(φ)

PREDICTED
SPECTRAL
REFLECTIVITY

$R_s(\lambda)$

P3a3

RDB
SPECTRAL
REFLECTIVITY
DATABASE

CCM

$X = k\!\int\!P(\lambda)\,R_s(\lambda)x(\lambda)d\lambda$

$Y = k\!\int\!P(\lambda)\,R_s(\lambda)y(\lambda)d\lambda$

$Z = k\!\int\!P(\lambda)\,R_s(\lambda)z(\lambda)d\lambda$

PREDICTED COLOR VALUE
$L_d, a_d, b_d$

P3a4

ECM

$I(\phi) = w_1\Delta E_1 + \ldots + w_N\Delta E_N$

OPTIMUM INK AMOUNT CALCULATION MODULE GROUP (PREDICTION PORTION U32)

# FIG. 16

CIE L*a*b* COLOR SPACE

$\Delta E_{D50}$

$\Delta E_{D65}$

SET OBSERVED LIGHT SOURCE

$\Delta E_A$

● TARGET COLOR VALUE

■ PREDICTED COLOR VALUE
(REFRESH φ n TIMES)

□ PREDICTED COLOR VALUE
(REFRESH φ m TIMES)

∗ n > m

# FIG. 17

COLOR REPRODUCTION IMAGE
OUTPUT CONTROL PROCESS

INPUT DATA ACQUISITION — S302

LUT SELECTION — S304

COLOR CONVERSION — S306

$\phi\ (d_c,\ d_m,\ d_y,\ d_k,\ d_{lc},\ d_{lm})$

HALFTONE — S308

OUTPUT CONTROL
DATA GENERATION — S310

| C | M | Y | K | Ic | Im |

21a  21

21a

21a

M2

# FIG. 18

SPECTRAL REFLECTIVITY DATABASE (RDB)

| INK AMOUNT SET | SPECTRAL REFLECTIVITY (%) |
|---|---|
| C, M, Y, K, Ic, Im | $\lambda$ = 320 330 ⋯ 840(nm) |
| 0, 0, 0, 0, 0, 0 | 100 100 ⋯ 100 |
| 51, 0, 0, 0, 0, 0 | |
| 102, 0, 0, 0, 0, 0 | |
| ⋮ | ⋮ |
| | |
| | |
| | |
| | |
| | |

CM INK AMOUNT SURFACE

# FIG. 19A

SPECTRAL NEUGEBAUER MODEL

$$R_s(\lambda) = a_w R_w(\lambda) + a_c R_c(\lambda) + \cdots + a_k R_k(\lambda)$$

$$a_w = (1 - f_c)(1 - f_m)(1 - f_y)$$
$$a_c = f_c(1 - f_m)(1 - f_y)$$
$$a_m = (1 - f_c)f_m(1 - f_y)$$
$$a_y = (1 - f_c)(1 - f_m)f_y$$
$$a_r = (1 - f_c)f_m f_y$$
$$a_g = f_c(1 - f_m)f_y$$
$$a_b = f_c f_m(1 - f_y)$$
$$a_k = f_c f_m f_y$$

# FIG. 19B

MURRAY-DAVIES MODEL

$$f_c = f_{1D-LUT}(d_c)$$

# FIG. 20A

## CELL DIVISION YULE-NIELSEN
## SPECTRAL NEUGEBAUER MODE

$d_c = d_m = 0$       $d_{max}$

$R_{00}$    $R_{10}$     $R_{20}$    $R_{30}$    $f_c, d_c$

C1     C2      C3

$R_{01}$   $R_{11}$    $R_{21}$    $R_{31}$

C4     C5      C6

$R_{02}$   $R_{12}$    $R_{22}$    $R_{32}$

C7     C8      C9

$d_{max}$ —

$R_{03}$    $R_{13}$     $R_{23}$    $R_{33}$

$f_m, d_m$

# FIG. 20B

## INK COVERING RATIO fc(d)

$f_c(d)$

1.0

0                   dcmax

INK AMOUNT

# FIG. 20C

## CALCULATION OF SPECTRAL REFLECTANCE R(λ)

$R_{11}$       $R_{21}$

fm

$a_{22}$   $a_{12}$    $R(\lambda)$

$1 - fm$

$a_{21}$   $a_{11}$

$R_{12}$       $R_{22}$

fc    $1 - fc$

$$R_s(\lambda) = \left( \sum a_i R_i(\lambda)^{1/n} \right)^n$$
$$= (a_{11}R_{11}(\lambda)^{1/n} + a_{12}R_{12}(\lambda)^{1/n} + a_{21}R_{21}(\lambda)^{1/n} + a_{22}R_{22}(\lambda)^{1/n})^n$$
$$a_{11} = (1 - f_c)(1 - f_m)$$
$$a_{12} = (1 - f_c)f_m$$
$$a_{21} = f_c(1 - f_m)$$
$$a_{22} = f_c f_m$$

# FIG. 21

# FIG. 22

SMOOTH GRADATION CHANGES ←——————————————→ ROUGH GRADATION CHANGES

(SAME APPLIES TO m / y / k / lc / lm)

SOURCE LUT 253          SOURCE LUT 240          SOURCE LUT 254

$d_c$         $d_c$         $d_c$

$d_c, D_i$         $d_c, D_i$         $d_c, D_i$

$D_i$   $D_{i+1}$   $D_{i+2}$      $D_i$   $D_{i+1}$   $D_{i+2}$      $D_i$   $D_{i+1}$   $D_{i+2}$

Dc (USAGE AMOUNT OF C)     Dc (USAGE AMOUNT OF C)     Dc (USAGE AMOUNT OF C)

                         (SAME APPLIES TO M / Y / K)

SMALL GRADATION INDEX VALUE IN2 ←——————————————→ LARGE GRADATION INDEX VALUE IN2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003060928 A
- JP 2009200820 A

- JP 2007516663 T

**Non-patent literature cited in the description**

- *Color Res Appl,* 2000, vol. 25, 4-19

- **R. BALASUBRAMANIAN.** Optimization of the spectral Neugebauer model for printer characterization. *J. Electronic Imaging,* 1999, vol. 8 (2), 156-166